# EUROPÄISCHE PATENTSCHRIFT

(11) **EP 4 385 701 B1**
(45) Veröffentlichungstag und Bekanntmachung des Hinweises auf die Patenterteilung: **30.04.2025**
(21) Anmeldenummer: 23155175.5
(22) Anmeldetag: 06.02.2023
(51) Int. Cl.: B29B 17/04, B29B 17/02, B44C 1/17, B29K 67/00, B29L 7/00, B29B 17/00, B32B 27/08

(54) **TRANSFERFOLIE, VERFAHREN ZUR HERSTELLUNG EINER TRANSFERFOLIE UND VERFAHREN ZUM RECYCLING EINER TRANSFERFOLIE**
TRANSFER FILM, METHOD FOR MANUFACTURING TRANSFER FILM, AND METHOD FOR RECYCLING TRANSFER FILM
FEUILLE DE TRANSFERT, PROCÉDÉ DE FABRICATION DE FEUILLE DE TRANSFERT ET PROCÉDÉ DE RECYCLAGE DE FEUILLE DE TRANSFERT

(30) Priorität: 12.12.2022 CN 202211610207
(43) Veröffentlichungstag der Anmeldung: 19.06.2024
(73) Patentinhaber: Kurz Stamping Technology (Hefei) Co., Ltd., Hefei 230601 (CN)
(72) Erfinder: SHI, Yuxia, Hefei (CN); NI, Caiyu, Hefei (CN); URBANEK, Janus, Hefei (CN)
(74) Vertreter: Zinsinger, Norbert

(56) Entgegenhaltungen:
- EP-A1- 3 725 485
- EP-A2- 2 799 241
- EP-B1- 1 765 587
- AU-A1- 2020 223 598
- DE-A1- 102020 111 105
- DE-A1- 2 046 115

## Beschreibung

Die Erfindung betrifft eine Transferfolie, ein Verfahren zur Herstellung einer Transferfolie und ein Verfahren zum Recycling einer Transferfolie.

Es ist bekannt, zur Dekoration von Oberflächen Prägefolien zu verwenden. Beispielsweise werden hierzu auf eine nicht wasserlösliche Trägerfolie über Beschichtungsverfahren Lackschichten, insbesondere mit Farbstoffen oder Pigmenten eingefärbte bzw. versehene Lackschichten und/oder über Bedampfungsverfahren Metallschichten aufgebracht. Die Transferlage wird dann gemeinsam mit der Trägerfolie auf die zu dekorierende Oberfläche aufgebracht. Zur Dekoration wird in einem Applikationsverfahren die Transferlage vollflächig oder nur in Teilflächenbereichen auf ein geeignetes Substrat übertragen. Im Falle einer Heißprägeapplikation wird die Haftung zum Substrat hin durch einen Prägestempel mittels thermischer Aktivierung einer Grundierungsschicht der Transferlage erzeugt. Im Falle einer Kaltprägeapplikation wird vor der Dekoration eine Kleberschicht auf den zu dekorierenden Bereichen des Substrats oder entsprechend auf die Transferlage aufgetragen, welche den Übertrag der Transferlage zum Substrat hin initiiert. Beim anschließenden Abziehen der Trägerfolie verbleibt die Transferlage auf der zu dekorierenden Oberfläche und wird in dem zu dekorierenden Bereich von der Trägerfolie abgelöst. Um in dem zu dekorierenden Bereich die Ablösung der Transferlage von der Trägerfolie zu ermöglichen, werden in den Prägefolien Ablöseschichten zwischen der Transferlage und der Trägerfolie angeordnet. Für solche Ablöseschichten werden insbesondere nicht-wasserlösliche Wachse verwendet, die bei höheren Temperaturen erweichen und somit gezielt die Haftkraft zwischen Transferlage und Trägerfolie verringern.

In nicht zu dekorierenden Bereichen wird die Transferlage zusammen mit der Trägerfolie wieder abgezogen und verbleibt damit in diesen Teilflächenbereich auf der Trägerfolie. Im Falle von nur kleinen zu dekorierenden Bereichen, wie zum Beispiel in der Form von feinen Schriftzeichen oder Strichmotiven, verbleiben große Mengen bzw. Teilflächenbereiche der Transferlage als Resttransferlage an der Trägerfolie. Eine weitere Verwendung einer solchen Transferfolie in einem erneuten Prägedurchgang ist in der Regel nicht oder nur in ganz speziellen Applikationsmaschinen und/oder mittels ganz spezieller Applikationsverfahren möglich. Die verbrauchte Trägerfolie mit Resttransferlage muss in allen Fällen teils aufwendig entsorgt werden.

Ein Recycling von Transferfolien ist von generellem Interesse, um eine weitere stoffliche Verwendung bzw. Verwertung der Trägerfolie und eine separate Entsorgung von verbliebener Transferlage nach dem Gebrauch der Transferfolie im Falle von nicht vollflächigem Übertrag beim Applikationsverfahren zu ermöglichen. Aus der WO 2021/151742 A1 ist beispielsweise eine Recyclingtechnik bekannt, welche mittels mechanischer Verfahren oder durch Einsatz starker Scherkräfte zur Separation der Transferlage von der Trägerfolie führt. Solche Verfahren bieten aber verfahrenstechnische Nachteile, wie z.B. hoher Energieverbrauch und niedriger Durchsatz sowie häufig nur unvollständiges Ablösen der Transferlage von der Trägerfolie, so dass eine sortenreine Rückgewinnung der Trägerfolie bzw. von sortenreinem Trägerfolienmaterial, beispielsweise sortenreinem PET, nur begrenzt möglich ist. Jedoch ist eine möglichst sortenreine Aufarbeitung der Trägerfolie für eine stoffliche Verwertung des Trägerfolienmaterials wünschenswert, da bereits geringe Anteile an sortenfremder Verunreinigung zu erheblichen qualitativen Mängeln im Recyclingprodukt führen. Ähnliches gilt für die Rückgewinnung des Materials einer Trägerfolie von einer Transferfolie, die fehlerhaft hergestellt wurde und damit Ausschussware darstellt.

Aus der AU 2020223598 A1 ist beispielsweise ein Verfahren zum Recycling eines dekorierten Plastikbehälters, z.B. eine Plastikflasche, sowie eine entsprechende Transferfolie, mit der der Plastikbehälter dekoriert wird, bekannt.

Aus der EP 3 725 485 A1 ist ein Verfahren zum Recycling eines Folienlaminats bekannt.

Aus der EP 2 799 241 A2 ein Verfahren und eine Vorrichtung zum Direktbedrucken von Kunststoffbehältern bekannt
Aus der DE 10 2020 111 105 A1 A ist eine Transferfolie mit einer wasserlöslichen Ablöseschicht bekannt.

Der Erfindung liegt nun die Aufgabe zugrunde, eine verbesserte Transferfolie anzugeben, die zudem eine verbesserte Recyclingfähigkeit aufweist.

Die Aufgabe wird von einer Transferfolie, insbesondere recyclingfähigen Transferfolie, gemäß dem Patentanspruch 1 gelöst.

Die Aufgabe wird weiter von einem Verfahren zur Herstellung einer Transferfolie, insbesondere nach den Ansprüchen 1 bis 8, gemäß dem Patentanspruch 9 gelöst.

Diese Aufgabe wird weiter von einem Verfahren zum Recycling einer Transferfolie, insbesondere gemäß den Ansprüchen 1 bis 8, bevorzugt hergestellt mit einem Verfahren nach den Ansprüchen 9 bis 12, gemäß dem Patentanspruch 13 gelöst.

Die erfindungsgemäße Transferfolie wird bevorzugt in dem erfindungsgemäßen Verfahren zum Recycling einer Transferfolie verwendet.

Durch eine derartige Transferfolie sowie ein derartiges Herstellungs- und Recyclingverfahren ergibt sich insbesondere gegenüber einer energetischen Verwertung der Vorteil, dass das recycelte Material der Trägerfolie zur Herstellung neuer Trägerfolien verwendet werden kann. Es ist auch denkbar, dass der recycelte Kunststoff für die Herstellung anderer Kunststofferzeugnisse, beispielsweise Spritzgussteile und/oder Extrusionsteile, verwendet werden kann. Dabei ist bevorzugt vorgesehen, dass die Transferfolie sowohl nach einem Applikationsverfahren als auch bei der Herstellung als Ausschussware recycelt wird. Hierbei ist es möglich, dass das Material der Trägerfolie derart recycelt wird, dass das entstehende Endprodukt in weiteren Schritten verarbeitet werden kann und dabei besonders gute Materialeigenschaften aufweist.

Hierbei wird insbesondere die Recyclingfähigkeit der Transferfolie verbessert, da der Einsatz eines alkalisch löslichen Topcoats ein vergleichsweises sauberes, einfaches und/oder kostengünstiges Recycling einer Transferfolie ermöglicht. Die Transferfolie ist hierbei insbesondere in einer alkalischen Waschflüssigkeit, wie beispielsweise einer wässrigen alkalischen Lösung oder Lauge, recyclingfähig.

Unter Recyclingfähigkeit und recyclingfähig ist hier insbesondere zu verstehen, dass alle auf die Trägerfolie aufgetragenen Schichten in einem Recyclingverfahren wieder vollständig abgelöst werden können. Unter Umständen kann jedoch die Ablöseschicht auf der Trägerfolie verbleiben. Die Ablöseschicht weist bevorzugt eine vernachlässigbar geringe Schichtdicke im Vergleich zur Schichtdicke der Trägerfolie auf. Selbst wenn die Ablöseschicht auf der Trägerfolie verbleibt, hätte dies aufgrund des geringen relativen Gewichtsanteils der Ablöseschicht keine Auswirkungen auf die Materialeigenschaften und/oder die Qualität des nach dem Recycling erhaltenen Trägermaterials bzw. Kunststoffmaterials. Insbesondere ist die Transferlage rückstandsfrei von der Trägerfolie entfernbar.

Beim Recycling mittels der alkalischen Waschflüssigkeit, bevorzugt mittels alkalischer Lösung und/oder mittels wässriger alkalischer Lösung und/oder mittels Lauge, wird durch das Auflösen des alkalisch löslichen Topcoats, insbesondere des alkalisch löslichen Bindemittels des Topcoats, eine gezielte Trennung der Transferlage von der Trägerfolie ermöglicht. Der Topcoat selbst ist dabei Teil der Transferlage. Der Topcoat wird dabei vollständig von der Trägerfolie abgelöst. Je nach Anteil des alkalisch löslichen Bindemittels im Topcoat kann der Anteil des in der alkalischen Waschflüssigkeit aufgelösten Topcoats auch weniger als 100% betragen. Im Schritt x) wird also insbesondere die Trägerfolie gereinigt und die Transferfolie somit von der Transferlage befreit. Wie oben erwähnt, kann die Ablöseschicht auf der Trägerfolie verbleiben.

Dadurch ist es insbesondere möglich, dass ein besonders reines Material der Trägerfolie zurückgewonnen wird. Vorteilhafterweise wird also eine besonders sortenreine Aufarbeitung der Trägerfolie für eine weitere stoffliche Verwendung bzw. Verwertung der Trägerfolie ermöglicht, die beispielsweise auch in weiteren chemischen oder mechanischen Recyclingschritten weiterverwendet werden kann. Verunreinigungen, beispielsweise durch das Material der Transferlage, die zu qualitativen Mängeln im Recyclingprodukt bzw. Rezyklat führen, werden vorteilhafterweise reduziert oder vermieden.

Zudem ist die Resttransferlage durch das Auflösen des alkalisch löslichen Topcoats, insbesondere des alkalisch löslichen Bindemittels des Topcoats, vorzugsweise als Schichtgebilde ablösbar, wobei das Schichtgebilde dann insbesondere als zusammenhängender Feststoff in der alkalischen Waschflüssigkeit vorliegt. Vorteilhafterweise sind also insbesondere im Sinne einer Löslichkeit in der alkalischen Waschflüssigkeit keine Stoffe aus dem Schichtgebilde der Transferlage herauslösbar. Lediglich bei metallisierten Folien mit einer Metallschicht aus einem unedlen Metall, können auch diese unedlen Metalle in Lösung gehen. Während der alkalisch lösliche Topcoat als homogene Lösung in der Waschflüssigkeit verbleibt, bildet die abgelöste unlösliche Transferlage bzw. Resttransferlage mit der Waschflüssigkeit insbesondere ein heterogenes Gemisch aus. Es wird hiermit der Vorteil erreicht, dass Stoffe, die nicht mehr oder insbesondere nur mit erhöhtem Aufwand aus der Waschflüssigkeit filtrierbar wären, reduziert werden können.

Die von der Waschflüssigkeit separierte Transferlage, beispielsweise in der Form von Transferlagenbestandteilen und/oder Transferlagenpartikeln mit einer bevorzugt heterogenen Zusammensetzung, kann zum Beispiel auch in weiteren chemischen und insbesondere auf die Transferlage hin optimierten Separationsprozessen verarbeitet werden.

Als Vorteil hat sich auch herausgestellt, dass der alkalische lösliche Topcoat gleich mehrere Aufgaben erfüllt. Zum einen sorgt er beim Recycling der Transferfolie dafür, dass die Transferlage von der Trägerfolie getrennt wird und zum anderen erfüllt er, wenn die Transferlage auf ein Zielsubstrat appliziert wurde, eine dekorative Funktion und stellt zudem eine Schutzschicht für die nach der Applikation unterhalb des Topcoats angeordneten Schichten der Transferlage dar.

Die Anordnung des Topcoats ist vorzugsweise so gewählt, dass dieser in direktem Kontakt mit der Ablöseschicht steht. D.h. beim Verfahren zur Herstellung der Transferfolie wird der Topcoat direkt nach der Aufbringung der Ablöseschicht aufgebracht. Nachfolgend können noch weitere Schichten auf den Topcoat als Transferlage aufgebracht werden. Nach der Applikation der Transferlage auf ein Zielsubstrat bildet der Topcoat die oberste Schicht aus.

Anwendung findet die erfindungsgemäße Transferfolie beispielsweise auf grafischen Verpackungen, Grußkarten, Dokumenten, Wertdokumenten, Zertifikaten, Etiketten oder Magazinen.

Weitere vorteilhafte Ausgestaltungen der Erfindung sind in den Unteransprüchen bezeichnet.

Unter einem alkalisch löslichen Topcoat ist hier bevorzugt eine aus ein oder mehreren Bestandteilen bestehende Schicht zu verstehen, wobei zumindest ein Bestandteil von einem alkalisch löslichen Bindemittel gebildet ist. Bevorzugt wird die alkalische Löslichkeit des Topcoats dadurch erreicht, dass dieser ein alkalisch lösliches Bindemittel umfasst. Neben dem alkalisch löslichen Bindemittel kann der Topcoat auch noch andere Bestandteile aufweisen, die nicht alkalisch löslich sind.

Unter Verpackung ist hier ein allgemeiner Begriff zu verstehen, der sowohl die Verkaufsverpackung eines Produktes als auch die Umverpackung, beispielsweise die Faltschachtel des Produktes, betrifft. Es kann sich bei der Verpackung auch um einen Teil einer Verpackung handeln, beispielsweise ein Etikett, welches auf eine Umverpackung aufgeklebt wird. Eine Verpackung kann auch ein Karton oder ähnliches sein, in welchem mehrere Umverpackungen des Produkts verpackt sind.

Unter transparent wird vorliegend insbesondere ein Bereich mit einer Transmissivität im Wellenlängenbereich des für den menschlichen Betrachters sichtbaren Lichts, insbesondere von 380 nm bis 780 nm, gemittelt über diesen Wellenlängenbereich, von mehr als 50%, bevorzugt von mehr als 70%, besonders bevorzugt von mehr als 80%, verstanden.

Unter opak wird vorliegend insbesondere ein Bereich mit einer Transmissivität im Wellenlängenbereich des für den menschlichen Betrachters sichtbaren Lichts, insbesondere von 380 nm bis 780 nm, gemittelt über diesen Wellenlängenbereich, von weniger als 40%, bevorzugt von weniger als 30%, besonders bevorzugt von weniger als 20%, verstanden.

Unter einer Schicht, unter einer Lage und unter einer Folie wird insbesondere ein im Wesentlichen flächiges Gebilde verstanden, welches wiederum einschichtig oder mehrschichtig ist. Eine Folie ist vorzugsweise selbsttragend. Eine Schicht oder eine Lage ist beispielsweise selbsttragend oder nicht selbsttragend.

Unter einer Transferfolie ist insbesondere sowohl ein Transferfolie vor deren Applikation, beispielsweise in einem Applikationsverfahren, insbesondere ausgewählt aus: Transferverfahren, Heißprägeverfahren, Kaltprägeverfahren, Laminierverfahren, Insert-Molding-Verfahren, In-Mould-Decoration-Verfahren, auf ein Substrat oder Zielobjekt als auch der nicht auf das Substrat oder Zielobjekt transferierte Teil einer Transferfolie nach der Applikation sowie Ausschussware zu verstehen. Im Falle, dass die Transferlage der Transferfolie zumindest teilweise auf ein zu dekorierendes Substrat, beispielsweise ein Bauteil oder ein Bogenmaterial oder ein Rollenmaterial, übertragen wurde, weist die Transferfolie sodann insbesondere eine Trägerfolie mit einer darauf angeordneten Resttransferlage auf. Die Resttransferlage beschreibt dabei den Teil der Transferlage, der nicht auf das zu dekorierende Substrat übertragen wurde und somit weiterhin auf der Trägerfolie verbleibt. Im Falle der Ausschussware verbleibt die Transferlage insbesondere vollständig auf der Trägerfolie. Der gewichtsmäßige Anteil der Transferlage bezogen auf die Trägerfolie ist bevorzugt bei Ausschussware größer als bei bereits übertragener Transferlage. Bevorzugt ist also vorgesehen, dass mit dem Verfahren die Transferlage, insbesondere zum Beispiel in der Form von Resttransferlage, die im Wesentlichen als Fremdmaterial anzusehen ist, von der Trägerfolie entfernt wird.

Weiter ist unter der Transferfolie insbesondere auch eine Mehrzahl von Schnittmaterial zu verstehen, welches beispielsweise durch ein Zerkleinern einer Transferfolie erzeugt wird. Insbesondere wird in Schritt x) die Trägerfolie der Transferfolie als Ganzes, also vorzugsweise in einem Stück, durch die Waschflüssigkeit geführt oder es wird vorzugsweise Schnittmaterial, welches Trägerfolie und Transferlage in einem Gebilde umfasst, in die alkalische Waschflüssigkeit gegeben. Es ist insbesondere auch denkbar, dass in dem Verfahren zum Recycling einer Transferfolie anstelle nur einer Transferfolie auch mehrere Transferfolien, insbesondere sortengleiche oder sortenähnliche Transferfolien, vorzugsweise zumindest mit sortengleicher Trägerfolie, verwendet werden. Die Transferlage ist vor dem Schritt x) bevorzugt zumindest bereichsweise auf der Trägerfolie vorhanden. Unter der Trägerfolie wird daher vorzugsweise sowohl die Trägerfolie als Ganzes als auch eine Mehrzahl von Schnittmaterial bzw. Trägerfolienschnitte verstanden. Unter der Transferlage ist vorzugsweise sowohl die Transferlage als Ganzes als auch eine Mehrzahl von Partikel der Transferlage zu verstehen.

Es ist bevorzugt vorgesehen, dass nach dem Schritt x) die Trägerfolie und/oder das Material der Trägerfolie, eine Reinheit im Bereich von 99,0 Gew.-% bis 100,0 Gew.-% aufweist (Gew.-% = Gewichtsprozent = Anteil des Gewichts in Prozent am Gesamtgewicht). Die Angabe der Reinheit bezieht sich bevorzugt auf den massenmäßigen Anteil des Materials der Trägerfolie.

Die Reinheit der Trägerfolie bzw. des Materials der Trägerfolie lässt sich somit insbesondere durch ein Entfernen von der Transferlage und dem alkalisch löslichen Topcoat von der Trägerfolie verbessern. Wie eingangs erwähnt, kann die Ablöseschicht ggf. auf der Trägerfolie verbleiben. Aber selbst in diesem Fall wird bevorzugt mindestens eine Reinheit der Trägerfolie bzw. des Materials der Trägerfolie von 99,0 Gew.-% oder mehr erreicht. Die Transferlage und/oder die Transferlagenbestandteile der Transferfolie werden insbesondere im Recyclingverfahren bevorzugt als Fremdmaterial angesehen. Die Transferlage und/oder die Transferlagenbestandteile können dabei jeweils in der Waschflüssigkeit gelöst sein oder auch ungelöst vorliegen.

Weiter ist es möglich, dass nach dem Schritt x) die Trägerfolie und/oder das Material der Trägerfolie, farblos, transparent, glasklar, opak, eingefärbt, zumindest partiell eingefärbt oder farbig ist.

Es ist denkbar, dass vor dem Schritt x), insbesondere vor dem Schritt a) und/oder vor dem Schritt b1), die Transferfolie einen Fremdmaterialanteil im Bereich von 0 Gew.-% bis 5 Gew.-%, bevorzugt von 0 Gew.-% bis 1 Gew.-%, aufweist. Dadurch, dass vor dem eigentlichen Recycling-Verfahren die Transferfolien sortiert, insbesondere sortenrein, sortiert werden, kann der nachgeschaltete Recyclingprozess effizienter gestaltet werden und das resultierende Material der Trägerfolie weist verbesserte Materialeigenschaften auf.

Weiter ist bevorzugt vorgesehen, dass vor dem Schritt x), insbesondere vor dem Schritt a) und/oder b1), die Transferfolie einen Anteil von Klebestreifen und/oder Spleißklebebänder im Bereich von 0 Gew.-% bis 0,5 Gew.-%, bevorzugt von 0 Gew.-% bis 0,1 Gew.-%, aufweist.

Erfindungsgemäß ist, dass während dem Schritt x) der Topcoat, insbesondere das alkalisch lösliche Bindemittel des Topcoats, dadurch aufgelöst wird, dass über Schnittkanten und/oder Bruchkanten und/oder Risse und/oder Mikrorisse der Transferfolie, insbesondere der Transferlage, die alkalische Waschflüssigkeit in die Transferfolie, insbesondere in die Transferlage und/oder zwischen Trägerfolie und Transferlage, eindringt und insbesondere der Topcoat dadurch aufquillt. Mikrorisse und/Risse entstehen beispielsweise bei der Applikation der Transferfolie auf ein Zielsubstrat. Es ist ferner auch möglich, dass die alkalische Waschflüssigkeit durch die alkalisch unlöslichen Schichten diffundiert und somit mit den Topcoat in Kontakt gelangt und den Topcoat auflöst. Beim Auflösen des Topcoats, insbesondere des alkalisch löslichen Bindemittels des Topcoats, wird die restliche Transferlage von der Trägerfolie abgetrennt. Dabei zerfällt die Transferlage bevorzugt in Partikel, wobei die Partikel in der alkalischen Waschflüssigkeit unlöslich sind, insbesondere wobei die Partikel bei einer ebenen Betrachtung der Partikel eine Größe im Bereich von 10 µm bis 50 mm, vorzugsweise im Bereich von 50 µm bis 5 mm, besonders bevorzugt im Bereich von 20 µm bis 5 mm, aufweisen. Durch das Aufquellen des Topcoats wird das Zerfallen der Transferlage in Partikel weiter beschleunigt. Je nach pH-Wert der alkalischen Waschflüssigkeit und ggf. je nach Größe des Schnittmaterials kann die Transferlage bevorzugt bereits nach einer Dauer von 30 Sekunden bis 120 Sekunden, vorzugsweise von 60 Sekunden bis 120 Sekunden, komplett von der Trägerfolie abgelöst sein.

Insbesondere ist vorgesehen, dass im Schritt x) die alkalische Waschflüssigkeit einen pH-Wert von größer 9, bevorzugt größer 11, besonders bevorzugt größer 13, aufweist. Es ist jedoch auch möglich, dass die alkalische Waschflüssigkeit einen pH-Wert von größer oder gleich 14 aufweist. In Laborversuchen wurde die Auswirkung des pH-Werts auf die Dauer zur Auflösung des alkalisch löslichen Topcoats, insbesondere des alkalisch löslichen Bindemittels des Topcoats, eines 5 cm x 5 cm großen Schnittmaterials einer Transferfolie untersucht. Dabei hat sich gezeigt, dass bei einem pH-Wert von 9 der Topcoat, insbesondere das alkalisch lösliche Bindemittel des Topcoats, innerhalb von 20 bis 30 Minuten vollständig aufgelöst war. Bei einem pH-Wert von 11 hingegen, war dies bereits nach 5 bis 10 Minuten der Fall. Verwendet man einen pH-Wert von 14 oder mehr, so kann der Topcoat, insbesondere das alkalisch lösliche Bindemittel des Topcoats, innerhalb von 10 bis 20 Sekunden aufgelöst werden.

Es hat sich zudem gezeigt, dass auch die Größe des Schnittmaterials Auswirkung auf die Dauer des Auflösevorgangs des Topcoats, insbesondere des alkalisch löslichen Bindemittels des Topcoats, hat. In Versuchen wurden das Auflöseverhalten unterschiedlich großer Schnittmaterialen jeweils in einer alkalische Waschflüssigkeit mit einem pH-Wert von 14 oder mehr bei einer Temperatur von 25°C untersucht. Hierbei hat sich gezeigt, dass bei einem Schnittmaterial mit einer Fläche von 100 cm² der Topcoat, insbesondere das alkalisch lösliche Bindemittel des Topcoats, nach einer Einwirkzeit in der alkalischen Waschflüssigkeit von bis zu 120 Sekunden vollständig aufgelöst war. Der Topcoat bzw. das Bindemittel war bei einem 25 cm² großen Schnittmaterial bereits nach einer Einwirkzeit von bis zu 60 Sekunden vollständig aufgelöst.

Es ist weiter denkbar, dass die alkalische Waschflüssigkeit eine oder mehrere Lösungen der nachfolgenden Lösungen umfasst: Lösungen von Alkalimetall- oder Erdalkalimetallhydroxiden, wie Kaliumhydroxid, Natriumhydroxid oder Caliumhydroxid; oder Erdalkalioxide, wie Calciumoxid oder Bariumoxid; oder Lösungen von Ammoniak oder Aminen.

Ferner ist bevorzugt vorgesehen, dass der Schritt x) bei Umgebungstemperatur, insbesondere in einem Temperaturbereich von 15°C bis 30°C, durchgeführt wird. Das Auflösen in Schritt x) kann jedoch in jedem Temperaturbereich stattfinden, in dem die alkalische Waschflüssigkeit in einem flüssigen Aggregatszustand vorliegt. Idealerweise bietet sich jedoch eine Temperatur an, die der Umgebungstemperatur entspricht. Dadurch kann auf ein aufwendiges und teures Aufheizen der alkalischen Waschflüssigkeit verzichtet werden.

Es ist auch denkbar, dass die alkalische Waschflüssigkeit eine Dichte im Bereich von 1,2 g/cm³ bis 1,4 g/cm³, bevorzugt im Bereich von 1,25 g/cm³ bis 1,35 g/cm³, aufweist, insbesondere wobei die Dichte der alkalischen Waschflüssigkeit derart gewählt wird, dass eine Sedimentation der Trägerfolie aufgrund von Dichteunterschieden stattfindet. Insbesondere bei einem vor dem Schritt x) vorgeschalteten Zerkleinerungsschritt ist die Einstellung der Dichte der alkalischen Waschflüssigkeit vorteilhaft. In diesem Fall wird bevorzugt Schnittmaterial in ein Waschflüssigkeitsbad gegeben. Wie oben bereits erwähnt, wird der alkalische lösliche Topcoat aufgelöst, sodass sich die Transferlage von der Trägerfolie trennt, wobei die Transferlage in Partikel zerfällt. Durch geeignete Wahl der Dichte der alkalischen Waschflüssigkeit setzen sich die gereinigten Trägerfolienschnitte am Boden des Waschflüssigkeitsbad ab, wohingegen die Partikel der Transferlage aufgrund einer geringeren Dichte an der Oberfläche schwimmen. Diese Partikel können dann auf einfache Art und Weise, beispielsweise mit einem Sieb, von der Waschflüssigkeit getrennt werden.

Vorteilhafterweise ist vorgesehen, dass bei dem Verfahren vor dem Schritt x) folgender Schritt durchgeführt wird:
a) Zerkleinern der Transferfolie mittels einer Schneidvorrichtung zu Schnittmaterial, bevorzugt wobei die Transferfolie aufgewickelt auf einer Rolle vorliegt.

Somit ist es möglich, die Transferfolie in Form von Schnittmaterial in die alkalische Waschflüssigkeit zu geben. Vorteilhafterweise wird dadurch ermöglicht, dass die alkalische Waschflüssigkeit besser über Schnittkanten und/oder Bruchkanten in die Transferfolie, insbesondere in die Transferlage und/oder zwischen Trägerfolie und Transferlage, eindringt. Generell gilt, je kleiner das Schnittmaterial, desto größer ist die relative Fläche der Schnittkanten und/oder Bruchkanten bezogen auf die Fläche des Schnittmaterials. Bei größeren Flächen der Schnittkanten und/oder Bruchkanten kann somit die alkalische Waschflüssigkeit den alkalisch löslichen Topcoat, insbesondere das alkalisch lösliche Bindemittel des Topcoats, schneller auflösen.

Bevorzugt ist vorgesehen, dass im Schritt a) das Schnittmaterial, insbesondere bei Betrachtung senkrecht auf eine von dem Schnittmaterial aufgespannte Ebene, jeweils eine Fläche im Bereich von 0,1 cm² bis 100 cm², bevorzugt von 1 cm² bis 10 cm², aufweist.

Insbesondere ist vorgesehen, dass die Schneidvorrichtung im Schritt a) zumindest eine Vorrichtung oder Kombinationen von Vorrichtungen umfasst, ausgewählt aus: Guillotine, Schredder, Schneidmühle, Hammermühle und/oder Mühle.

Insbesondere ist vorgesehen, dass vor dem Schritt x), insbesondere vor dem Schritt a) und/oder vor dem Schritt b1), und vorzugsweise bei dem Applikationsverfahren, insbesondere ausgewählt aus: Transferverfahren, Heißprägeverfahren, Kaltprägeverfahren, Laminierverfahren, In-Mould-Decoration-Verfahren, die Transferlage auf ein zu dekorierendes Substrat zumindest teilweise übertragen wird, wobei eine Transferfolie als Nebenprodukt bereitgestellt wird. Bevorzugt handelt es sich sodann um eine Transferfolie mit einer Transferlage in der Form einer Resttransferlage. In diesem Fall umfasst die Resttransferlage auch den alkalischen löslichen Topcoat.

Es ist möglich, dass die Transferfolie mittels Sammelbehälter gesammelt, insbesondere sortenrein, gesammelt wird. Die gesammelte Transferfolie kann ungeschnitten oder alternativ auch geschnitten und/oder geschreddert und/oder verdichtet und/oder verpresst sein. Bevorzugt ist es möglich, dass vor dem Schritt x), insbesondere vor dem Schritt a) und nach dem Applikationsverfahren, vorzugsweise Transferverfahren und/oder Laminierverfahren und/oder In-Mould Decoration-Verfahren, die Transferfolie mittels Sammelbehälter, insbesondere mittels Gestells und/oder Container und/oder Transportbox und/oder gebänderter Ballen, gesammelt wird.

Als gebänderter Ballen werden vorzugsweise verpresste Transferfolien bezeichnet, deren Volumen durch Verpressen verkleinert wird. Um die verpressten Transferfolien zusammen zu halten, ist bevorzugt vorgesehen, dass diese mit Bändern umwickelt werden, sodass ein gebänderter Ballen bereitgestellt wird.

Unter sortenrein ist vorzugsweise zu verstehen, dass möglichst nur eine Transferfolie pro Rolle aufgewickelt und/oder gesammelt wird. Damit werden gute Materialeigenschaften der recycleten Trägerfolie bzw. des recycleten Materials der Trägerfolie gewährleistet.

Es ist somit möglich, dass das Verfahren vor dem Schritt a) weiter den folgenden Schritt umfasst:
Sammeln der Transferfolie mittels eines Sammelbehälters, insbesondere mittels Gestells und/oder Container und/oder Transportbox und/oder gebänderter Ballen.

Bevorzugt ist es vorgesehen, dass vor dem Schritt x), insbesondere vor dem Schritt a), weiter folgender Schritt ausgeführt wird:
Transport der Transferfolie, insbesondere des Schnittmaterials, mittels einer Zuführvorrichtung und/oder mittels zumindest eines Transportbehälters, insbesondere Sammelbehälter und/oder Gestell und/oder Container und/oder Transportbox und/oder gebänderter Ballen und/oder Big Bag, wobei der zumindest eine Transportbehälter, insbesondere vor dem Schritt x), mit den Schnittmaterial befüllt wird.

Unter Zuführvorrichtung sind jegliche Transportfahrzeuge und/oder Förderbänder und/oder pneumatische Förderungen oder ähnliches zu verstehen.

Es ist auch möglich, dass vor dem Schritt x), insbesondere vor dem Schritt a) und/oder vor dem Schritt b1), und nach dem Applikationsverfahren, insbesondere ausgewählt aus: Transferverfahren, Heißprägeverfahren, Kaltprägeverfahren, Laminierverfahren, In-Mould-Decoration-Verfahren, die Transferfolie, insbesondere auf einen Folienkern, in Form einer Rolle aufgewickelt wird. In einer weiteren Ausgestaltung wird die Transferfolie sortenrein, insbesondere auf einen Folienkern, aufgewickelt. Alternativ dazu kann das Aufwickeln in Form einer Rolle auch ohne Folienkern, also kernlos erfolgen und/oder auf einen Folienkern erfolgen, der nach dem Aufwickeln aus der Folienrolle entfernt wird, sodass die Folienrolle danach kernlos vorliegt. Ein solcher entnehmbarer Folienkern kann beispielsweise Teil einer Maschine sein, auf der die Transferfolie verarbeitet wird.

Unter Folienkern ist insbesondere eine Papprolle und/oder eine Kunststoffrolle und/oder ein Maschinenteil zu verstehen, auf die die Transferfolie aufgewickelt wird oder ist. Der Folienkern kann entweder in der Folienrolle verbleiben oder nach dem Aufwickeln der Folienrolle wieder aus der Folienrolle entfernt werden.

Es ist somit möglich, dass vor dem Schritt a) und/oder vor dem Abwickeln im Schritt b1) folgender Schritt ausgeführt wird:
Aufwickeln der Transferfolie, insbesondere auf einen Folienkern, sodass eine Rolle bereitgestellt wird.

Weiter ist es möglich, dass das Verfahren vor dem Schritt a) und/oder vor dem Abwickeln im Schritt x11) folgenden Schritt umfasst:
Transport der Rolle zu der Abwickelvorrichtung und/oder Transport der Rolle und/oder des Sammelbehälters per Hand und/oder mittels einer Zuführvorrichtung zu der Schneidvorrichtung.

Durch das Sammeln bzw. Aufwickeln, insbesondere durch das sortenreine Sammeln und/oder Aufwickeln, der Transferfolie wird gewährleistet, dass ein geringer Fremdmaterialanteil vorliegt. In Schritt a) ist es insbesondere auch denkbar, dass anstelle einer Transferfolie mehrere Transferfolien einer Sorte gleichzeitig verarbeitet, insbesondere zerkleinert, werden.

Beim Zerkleinern der Transferfolie im Schritt a) ist insbesondere vorgesehen, dass die aufgewickelte Transferfolie in Folienbahnen geschnitten wird, wobei die Rolle mit der Transferfolie in einer V-förmigen Mulde fixiert wird, insbesondere waagrecht fixiert wird, und anschließend mittels eines Messers, insbesondere von oben oder von unten oder von der Seite, in Längsrichtung bis zum Folienkern aufgeschnitten wird und der Folienkern entnommen wird, insbesondere falls ein Folienkern vorhanden ist. Dies hat den Vorteil, dass die Transferfolie auf einfache Weise schnell von dem Folienkern gelöst wird und für die Weiterverarbeitung verwendet werden kann. Bevorzugt wird die Rolle derart aufgeschnitten, dass das Messer senkrecht zu einer Tangente der Mantelfläche in Richtung des Folienkerns schneidet. Insbesondere beim Schneiden von oben ergibt sich der Vorteil, dass die Rolle durch die V-förmige Mulde fixiert wird und keine weiteren Widerlager nötig sind, um den Schneiddruck des Messers aufzunehmen. Bevorzugt ist es vorgesehen, dass dieser Verfahrensschritt mittels einer Guillotine ausgeführt wird.

Wie eingangs erwähnt, besteht der Folienkern vorzugsweise aus einem anderen Material als die Transferfolie weshalb bevorzugt vorgesehen ist, dass dieser als Fremdmaterial wirkende Folienkern entfernt wird.

Bevorzugt ist es möglich, dass während dem Schritt x), insbesondere wenn zuvor Schritt a) durchgeführt wird, das Schnittmaterial in der alkalischen Waschflüssigkeit eine Konzentration im Bereich von 1 Gew.-% bis 30 Gew.-%, bevorzugt von 5 Gew.-% bis 15 Gew.-%, aufweist. Bei der Konzentration handelt es sich vorzugsweise um die Feststoffkonzentration des Schnittmaterials in der Waschflüssigkeit bezogen auf das Gewicht. Durch eine derartige Konzentration wird gewährleistet, dass stets genügend alkalische Waschflüssigkeit vorhanden ist, um von jedem Schnittmaterial den alkalisch löslichen Topcoat aufzulösen. Zudem wird eine Klumpenbildung vermieden.

Vorteilhafterweise wird die alkalische Waschflüssigkeit mit der Transferfolie und/oder dem Schnittmaterial während Schritt x), insbesondere, wenn zuvor Schritt a) durchgeführt wird, gerührt. Hierdurch wird das Eindringen der alkalischen Waschflüssigkeit in die Transferfolie bzw. das Schnittmaterial beschleunigt. Vorzugsweise wird hierbei die alkalische Waschflüssigkeit mit einer Rührdauer in einem Bereich von 30 Sekunden bis 120 Sekunden, vorzugsweise von 60 Sekunden bis 120 Sekunden gerührt. Vorzugsweise liegt die Rührgeschwindigkeit eines Rührwerkzeugs in einem Bereich von 1 bis 200 Umdrehungen, bevorzugt von 10 bis 50 Umdrehungen pro Minute.

Ferner ist es möglich, dass während dem Schritt x), insbesondere wenn zuvor Schritt a) durchgeführt wird, die Transferlage des Schnittmaterials von der Trägerfolie ablöst, sodass Partikel der Transferlage und Trägerfolienschnitte entstehen. Bevorzugt werden von der Trägerfolie keine Partikel abgelöst. Das bedeutet, dass ein Trägerfolienschnitt dieselbe Fläche aufweist wie ein Schnittmaterial. Wohingegen, wie oben erwähnt, die Transferlage in Partikel zerfällt.

Vorzugsweise ist vorgesehen, dass die Trägerfolienschnitte mittels Filtration und/oder Zentrifugation und/oder Sedimentation von der alkalischen Waschflüssigkeit separiert werden. Wie oben bereits beschreiben findet eine Sedimentation der Trägerfolie aufgrund von Dichteunterschieden statt. Bei Verwendung einer PET-Trägerfolie wird dabei die Dichte der alkalischen Waschflüssigkeit vorteilhaft so eingestellt, dass sich die Trägerfolienschnitte am Boden des Waschflüssigkeitsbads absetzen. Dieser Vorgang wird auch Sedimentation bezeichnet. Andererseits ist die Dichte der alkalischen Waschflüssigkeit auch vorteilhafterweise so gewählt, dass die Partikel der abgetrennten Transferlage in der Waschflüssigkeit, vorzugsweise an der Oberfläche der Waschflüssigkeit, schwimmen. Die Partikel können dann beispielsweise mittels eines Siebs aus der Waschflüssigkeit entfernt werden. Nachfolgend können dann die Trägerfolienschnitte aus der Waschflüssigkeit für die Weiterverarbeitung entnommen werden.

Beispielsweise weist eine PET-Trägerfolie eine Dichte von ca. 1,4 g/cm³ auf, wohingegen die Materialien der Schichten der Transferlage, beispielsweise der Grundierungsschicht oder der Haftvermittlerschicht, eine Dichte im Bereich von 0,9 g/cm³ bis 1,25 g/cm³ aufweisen. Durch Einstellung der Dichte der alkalischen Waschflüssigkeit in einem Bereich von 1,2 g/cm³ bis 1,4 g/cm³, bevorzugt im Bereich von 1,25 g/cm³ bis 1,35 g/cm³, kann beispielsweise die beschriebene Sedimentation erzielt werden. Die Wahl der Dichte der alkalischen Flüssigkeit ist dabei vorzugsweise in Abhängigkeit des Materials der Trägerfolie zu wählen. Gegenüber der Filtration oder der Zentrifugation bietet die Sedimentation den Vorteil, dass diese ohne zusätzliche Energie durchgeführt werden kann.

Es kann weiter möglich sein, dass die separierten Trägerfolienschnitte gewaschen und/oder neutralisiert und/oder getrocknet, vorzugsweise mittels eines mechanischen und/oder thermischen Trocknungsverfahren, werden, insbesondere wobei eine Reinheit der Trägerfolienschnitte, insbesondere dem Trägerfolienmaterial, in einem Bereich von 99% bis 100% erreicht wird. Durch diese Verfahrensschritte wird sichergestellt, dass mögliche an den Trägerfolienschnitte verbleibende Reste der alkalischen Waschflüssigkeit oder ggf. Partikel der Transferlage entfernt werden und zudem den Trägerfolienschnitten die Feuchtigkeit entzogen wird. Dadurch wird ein möglichst reines Trägerfolienmaterial erhalten. Als mögliche Verunreinigung tritt hier höchstens eine auf den Trägerfolienschnitten bzw. der Trägerfolie verbliebene Ablöseschicht auf. Da diese, wie eingangs beschrieben, bezogen auf die Masse der Trägerfolie eine vernachlässigbar geringe Masse aufweist, kann dennoch eine Reinheit des Trägerfolienmaterials von mehr als 99% erreicht werden.

Alternativ zu dem Zerkleinern ist es ebenfalls bevorzugt vorgesehen, dass das Recycling-Verfahren in einem Rolle-zu-Rolle-Verfahren durchgeführt wird. Hierbei wird bevorzugt die Transferfolie als Ganzes durch das Waschflüssigkeitsbad geführt und anschließend die Transferfolie ohne Transferlage, also lediglich die Trägerfolie, gegebenenfalls mit darauf vorhandener Ablöseschicht, wieder aufgewickelt.

Bevorzugt ist es möglich, dass das Verfahren vor dem Schritt x) den folgenden Schritt aufweist:
b1) Abwickeln der Transferfolie von einer Abwickelrolle mittels einer Abwickelvorrichtung, wobei die abgewickelte Transferfolie in Kontakt mit der alkalischen Waschflüssigkeit gebracht wird, insbesondere indem die Transferfolie in einem Waschflüssigkeitsbad geführt wird.

Weiter ist es möglich, dass zwischen Schritt b1) und Schritt x) ein Aufrauen und/oder Anstanzen und/oder Verkratzen der Transferlage durchgeführt wird. Vorzugsweise weist hierdurch der alkalisch lösliche Topcoat eine größere Kontaktfläche für die alkalische Waschflüssigkeit auf. Damit kann die Geschwindigkeit des Auflösens des alkalisch löslichen Topcoats, insbesondere des alkalisch löslichen Bindemittels des Topcoats, erhöht werden. Bevorzugt wird hierbei die Transferfolie über eine mit mechanischen Werkzeugen, beispielsweise mit Dornen, ausgestattete Rolle geführt, so dass bevorzugt punktuelle Beschädigungen der Transferlage generiert werden. Dabei kann die Transferfolie, insbesondere auch die Trägerfolie, sogar durchstochen werden, solange die Transferfolie noch ausreichend mechanisch stabil bleiben kann und nicht reißt. Entsprechende Werkzeuge, insbesondere Dornen, können einen Abstand von 1 mm bis 5 mm über die Breite der Transferfolie aufweisen.

Ferner ist bevorzugt vorgesehen, dass das Verfahren nach dem Schritt b1) und nach dem Schritt x) den folgenden Schritt aufweist:
b2) Aufwickeln der Trägerfolie, auf eine Aufwickelrolle, wobei die Trägerfolie aus dem Bad der alkalischen Waschflüssigkeit herausgeführt wird, insbesondere wobei der Topcoat in gelöster Form und/oder die Transferlage in ungelöster Form in der alkalischen Waschflüssigkeit verbleibt.

Hierbei wird das Abtrennen der Trägerfolie in Schritt x1) vereinfacht, indem die Trägerfolie durch das Aufwickeln einfach wieder aus der Waschflüssigkeit herausgeführt werden kann. Bevorzugt trennt sich auch hierbei die Transferlage von der Trägerfolie, indem die Transferlage in Partikel zerfällt. Diese Partikel schwimmen vorzugsweise in der alkalischen Waschflüssigkeit. Diese Partikel der Transferlage werden auch als ungelöste Form der Transferlage bezeichnet.

Vorzugsweise wird die Transferfolie, insbesondere die Trägerfolie, vorzugsweise zwischen Schritt b1) und Schritt b2) mit einer Geschwindigkeit von 1 m/min bis 100 m/min durch die alkalische Waschflüssigkeit geführt. Insbesondere wird die Transferfolie, bevorzugt die Trägerfolie, vorzugsweise zwischen Schritt b1) und Schritt b2), für eine Dauer in einem Bereich von 10 s bis 150 s in Kontakt mit der Waschflüssigkeit gebracht und/oder durch das Waschflüssigkeitsbad geführt.

Beispielsweise ist es möglich, die Transferfolie, insbesondere die Trägerfolie, mittels ein oder mehreren Umlenkrollen durch das Waschflüssigkeitsbad zu führen. Hiermit ist es insbesondere möglich, die Verweilzeit zu erhöhen und die Auflösung des alkalisch löslichen Topcoats zu beschleunigen.

Weiter ist es möglich, dass die Trägerfolie durch ein Reinigungsbad geführt wird, nachdem die Trägerfolie aus dem Waschflüssigkeitsbad herausgeführt wurde. Hierbei wird die Trägerfolie vorzugsweise in Kontakt mit einer neutralisierenden Reinigungsflüssigkeit gebracht, die bevorzugt Wasser und/oder einer oder mehrerer Säuren umfasst einzeln oder in Kombination, ausgewählt aus Kohlensäure, Essigsäure, Salzsäure, Schwefelsäure. Damit kann anhaftende Lauge neutralisiert werden oder beispielsweise der pH-Wert im Bereich zwischen 5 und 8 eingestellt werden. Weiter ist die Zugabe von Alkoholen einzeln oder in Kombination ausgewählt aus Ethanol, n-Propanol, iso-Propanol, Butanol, Aceton möglich. Weiter ist die Zugabe zur Reinigungsflüssigkeit von Additiven und/oder Tensiden, wie beispielsweise Entschäumern, möglich. Durch das Reinigungsbad können insbesondere Reste der alkalischen Waschflüssigkeit, welche sowohl Anteile des aufgelösten alkalisch löslichen Topcoats als auch Partikel der Transferlage enthält und die gereinigte Trägerfolie noch benetzen, bevorzugt entfernt werden. Insbesondere ist ein Anhaften bereits abgeschiedener Partikel der Transferlage auf der gereinigten Trägerfolie vorzugsweise zu verhindern. Vor dem Aufwickeln auf die Aufwickelrolle wird die Trägerfolie vorzugsweise wieder aus dem Reinigungsbad herausgeführt.

Es ist auch möglich, dass die Trägerfolie getrocknet wird, nachdem die Trägerfolie aus dem Waschflüssigkeitsbad und/oder dem Reinigungsbad herausgeführt wurde. Nach dem Trocknen ist es optional möglich, etwaige lose Reste der Transferlage, insbesondere Partikel der Transferlage, mittels einer Absaugvorrichtung und/oder Klebevorrichtung zu entfernen.

Das Verfahren wird somit insbesondere in einem Rolle-zu-Rolle-Verfahren durchgeführt und/oder die Schritte b1), x) und b2) werden in einem Inline-Prozess durchgeführt. Es ist auch möglich, dass in einem Ausführungsbeispiel das Herstellungsverfahren und/oder das Applikationsverfahren der Transferfolie innerhalb des Verfahrens zum Recycling der Transferfolie, insbesondere mit den Schritten b1, x) und b2), in einem Inline-Prozess durchgeführt werden.

Es ist auch denkbar, dass zur Ablösung der Transferlage von der Trägerfolie in Schritt x) und/oder zwischen den Schritten b1) und b2) zusätzlich ein mechanisches Abriebsystem und/oder ein Bürstenrollensystem und/oder ein Schaumstoffrollensystem und/oder ein Sprühdüsensystem eingesetzt wird. Hierdurch ist es insbesondere möglich, die Ablösung der Transferlage zu beschleunigen. Insbesondere ist es denkbar, die alkalische Waschflüssigkeit, bevorzugt zusätzlich, mittels Sprühdüsen auf die mit den Transferlagen beschichtete Seite der Transferfolie zu geben, um ein noch schnelleres Ablösen der Transferlage zu erzielen.

Bevorzugt ist es möglich, dass nach dem Schritt x) unlösliche Partikel der Transferlage mittels eines Separationsverfahrens von der alkalischen Waschflüssigkeit getrennt werden, insbesondere wobei das Separationsverfahren Filtration und/oder Zentrifugieren und/oder Sieben und/oder Dekantieren umfasst.

Ferner ist insbesondere möglich, dass die alkalische Waschflüssigkeit nach dem Schritt x) mittels Membranfiltration und/oder chemische Fällung aufbereitet wird. Hierdurch können in der alkalischen Waschflüssigkeit gelöste Bestandteile der Transferlage, wie beispielsweise der Topcoat und ggf. unedle Metalle der Metallschicht, aus der Waschflüssigkeit entfernt werden. Die gereinigte Waschflüssigkeit kann dann wieder für das Recycling einer weiteren Transferfolie verwendet werden.

Bevorzugt ist es vorgesehen, dass nach dem Schritt x) die Trägerfolie und/oder die Trägerfolienschnitte und/oder das Material der Trägerfolie, zu einem Kompakterzeugnis und/oder Extrusionserzeugnis weiterverarbeitet werden, insbesondere wobei das Kompakterzeugnis und/oder das Extrusionserzeugnis für zumindest einen nachfolgenden Prozess oder eine Kombination von Prozessen geeignet ist, ausgewählt aus: Spritzguss, Extrusion, Flachfolienextrusion, Pressverfahren, Compoundieren, chemisches Recycling und/oder energetische Verwertung. Dadurch, dass bei dem Recycling-Verfahren das Material der Trägerfolie und/oder die Trägerfolie und/oder Trägerfolienschnitte mit einer Reinheit im Bereich von 99,0% bis 100,0% vorliegt, weisen auch nachfolgend erzeugte Produkte, wie beispielsweise Spritzgussteile, Extrusionsteile, Trägerfolien etc., eine derartige Reinheit auf, was sich wiederum positiv auf die Materialeigenschaften des Recycling-Produkts auswirkt.

Vorzugsweise weist die Trägerfolie der Transferfolie eine Schichtdicke im Bereich von 4,5 µm bis 100 µm, bevorzugt im Bereich von 4,5 µm bis 12 µm, auf. Die Trägerfolie ist vorzugweise farblos, transparent, glasklar, opak, eingefärbt, zumindest partiell eingefärbt oder farbig. Die Trägerfolie ist oder wird vorzugsweise mittels Extrusion, insbesondere Flachfolienextrusion, hergestellt. Bevorzugt ist, dass die Trägerfolie aus Polyester besteht oder Polyester umfasst, insbesondere aus ein oder mehreren Komponenten oder Kompositmaterialen ausgewählt aus Polyethylenterephathalat (PET), Polylactid, Polyethylenfuranoat, Polybutylenterephthalat, Polytrimethylenterephatalat, Polyethylennaphthalat, und/oder aus Polyestercarbonat, Cellophan, Celluloseacetat, Polyvinylchlorid, Polyimid, Polyvinylidenchlorid und/oder Papiere, insbesondere beschichtete und/oder laminierte Papiere, besteht oder diese umfasst.

Zweckmäßigerweise weist die Trägerfolie einen Hauptbestandteil, bevorzugt PET, auf, wobei der Anteil des Hauptbestandteils, bevorzugt des PET, in der Trägerfolie mehr als 97%, bevorzugt mehr als 99,9%, besonders bevorzugt mehr als 99,97%, beträgt. Um die Recycelfähigkeit der Trägerfolie zu verbessern und auch die Materialeigenschaften des Endprodukts, ist es bevorzugt vorgesehen, dass das Trägermaterial möglichst rein vorliegt, d.h. keine anderen Fremdstoffe und/oder Kunststoffe, welche von dem Trägermaterial verschieden sind, vorhanden sind. Der Hauptbestandteil der Trägerfolie ist insbesondere PET.

Neben dem alkalisch löslichen Topcoat kann die Transferlage auch bevorzugt weitere Schichten aufweisen, einzeln oder in Kombination ausgewählt aus: zumindest eine Metallschicht, zumindest eine Grundierungsschicht, zumindest eine Farbschicht, zumindest eine Kleberschicht, zumindest eine Haftvermittlerschicht, zumindest eine Barriereschicht, zumindest eine Schutzschicht, zumindest eine Replikationsschicht, zumindest eine Oxidschicht, zumindest eine Maskenschicht. Diese weiteren Schichten können jeweils vollflächig oder nur teilflächig vorliegen. Die weiteren Schichten, können einzeln oder als Kombination mehrerer Schichten ein Muster, ein Dekor, ein Raster, eine geometrischen Figur, ein Motiv, Alphanumerisches Zeichen, Logo, oder Kombinationen ausbilden.

Die Farbschicht besteht vorzugsweise aus einer Kombination von mindestens einem Bindemittel und/oder mindestens einem Füllstoff sowie optional mindestens einem Additiv. Unter Farbschicht wird vorzugsweise eine spezielle, funktionale Schicht verstanden, welche insbesondere einen für einen Betrachter erfassbaren Farbeindruck erzeugt.

Unter Farbe wird insbesondere eine Einfärbung verstanden, welche bezüglich der Durchsichtigkeit und/oder der Klarheit bzw. des Streuvermögen bevorzugt glasklar transparent eingefärbt, streuend transparent eingefärbt oder auch opak eingefärbt umfasst. Vorzugsweise tritt die Farbe als Eigenfarbe eines Materials auf und/oder ist als in Blickrichtung vor einer Schicht als zusätzliche eingefärbte Schicht angeordnet, wobei die darunterliegende Schicht, insbesondere die Metallschicht, insbesondere für einen Betrachter in ihrem farbigen Erscheinungsbild modifiziert wird. Die Farbe erscheint hierbei bevorzugt in ihrem Farbton und/oder ihrer Farbsättigung und/oder in ihrer Transparenz unter nahezu allen, insbesondere unter allen, Betrachtungs- und/oder Beleuchtungswinkeln optisch konstant bzw. invariabel. Es ist weiter möglich, dass die Farbe selbst optisch variabel ist, wobei sich der Farbton und/oder die Farbsättigung und/oder die Transparenz der Farbe bei sich änderndem Betrachtungs- und/oder Beleuchtungswinkel insbesondere ändert.

Bevorzugt ist die Farbschicht als lasierende Farbschicht, insbesondere als transparent oder transluzent durchscheinende Farbschicht, ausgebildet. Weiter bevorzugt enthält die Farbschicht vorzugsweise ein Additiv und/oder ein Füllstoff, welches bevorzugt Licht im ultravioletten Wellenlängenbereich, insbesondere in einem Wellenlängenbereich zwischen 200 nm und 380 nm, insbesondere gemittelt über diesen Wellenlängenbereich, absorbiert. Insbesondere weisen die UV-Blocker keine oder nur eine sehr geringe Absorption in dem für das menschliche Auge sichtbaren Wellenlängenbereich von 380 nm bis 780 nm auf, um den Farbeindruck der Farbschicht insbesondere nicht zu verändern.

Als farbgebende Stoffe der zumindest einen Farbschicht eignen sich bevorzugt Farbstoffe und/oder Pigmente. Vorzugsweise sind Pigmente im Medium, in welches sie integriert werden, praktisch unlöslich, insbesondere unlöslich. Farbstoffe lösen sich vorzugsweise während ihrer Anwendung auf und verlieren insbesondere ihre Kristall- und/oder Partikelstruktur. Mögliche Klassen von Farbstoffen sind basische Farbstoffe, fettlösliche Farbstoffe oder Metallkomplexfarbstoffe. Mögliche Klassen von Pigmenten sind organische und anorganische Pigmente. Vorzugsweise werden Pigmente aus einem einstückig vorliegenden Material aufgebaut oder weisen insbesondere alternativ dazu komplexe Aufbauten auf, beispielsweise als Schichtgebilde mit einer Vielzahl von Schichten aus unterschiedlichen Materialien und/oder beispielsweise als Kapseln aus unterschiedlichen Materialien, insbesondere mit Kern und Hülle.

Die Farben der zumindest einen Farbschicht sind insbesondere transparent oder zumindest transluzent, wobei das Transmissionsvermögen vorzugsweise zwischen 5% und 99%, insbesondere gemittelt über einen Teilbereich des für das menschliche Auge sichtbaren Wellenlängenbereichs von 380 nm bis 780 nm, bevorzugt im Bereich von 430 nm bis 690 nm, liegt.

Weiter ist es möglich, dass die zumindest eine Farbschicht aus mehreren unterschiedlichen Farben ausgebildet ist und/oder besteht, wobei diese hierbei vorzugsweise auch Bereiche mit Farbmischung aus der ersten und zweiten Farbe aufweisen, welche mittels Überlappung der Farbschichten und/oder durch Aufrasterung der Farbschichten entstehen. Insbesondere variiert die Farbsättigung in den Farbschichten.

Die Farbschicht kann mit mindestens einem Pigment oder einem Farbmittel der Farbe Cyan, Magenta, Gelb (Yellow) oder Schwarz (Black) (CMYK = Cyan Magenta Yellow Key: Schwarz als Farbtiefe) oder der Farbe Rot, Grün oder Blau (RGB) insbesondere zum Erzeugen einer subtraktiven Mischfarbe erzeugt werden.

Insbesondere ist es vorgesehen, dass die zumindest eine Farbschicht eine Schichtdicke im Bereich von 0,2 µm bis 20 µm, bevorzugt im Bereich von 0,4 µm bis 8 µm, aufweist.

Die Metallschicht weist bevorzugt eine Schichtdicke in einem Bereich von 5 nm bis 50 nm, bevorzugt in einem Bereich von 10 nm bis 40 nm, auf. Es ist auch möglich, dass die Metallschicht transparent oder opak ist. Die Metallschicht sorgt insbesondere für einen metallischen Glanz- und Spiegeleffekt, welcher von einem Betrachter oder Sensor wahrnehmbar ist.

Bevorzugt ist es möglich, dass die Metallschicht Materialien und/oder Verbindungen, bevorzugt mit hohem Brechungsindex, umfasst oder daraus besteht, einzeln oder als Legierung aus mindestens zwei dieser Materialien oder als Eutektikum ausgewählt aus: Aluminium, Chrom, Silber, Gold, Kupfer, Nickel, Zinn, Indium, Siliziumoxid, Magnesiumoxid, Titanoxid, Aluminiumoxid, Zinkoxid, Zinksulfid. Hierbei ist es möglich, dass die Metallschicht ein- oder mehrschichtig ist. Bei der Verwendung einer Metallschicht aus einem oder mehreren unedlen Metallen, wie beispielsweise Aluminium, kommt es, wie oben erwähnt, beim Eintauchen der Transferfolie in das alkalische Waschflüssigkeitsbad dazu, dass sich die Metallschicht aus unedlem Metall ebenfalls auflöst. Hierbei kann unter anderem auch Wasserstoff freigesetzt werden. Insbesondere ist es daher vorgesehen, dass Sicherheitsvorkehrungen, wie beispielsweise eine Absaugung oder Entlüftung, vorgenommen werden.

Vorzugsweise wird die Metallschicht als eine der ein oder mehreren Schichten der Transferlage mittels Vakuum-Bedampfung aufgebracht. Mittels einer Vakuum-Bedampfung sind vergleichsweise dünne Schichtaufträge möglich, sodass Schichtdicken im Bereich von 5 nm bis 50 nm, bevorzugt im Bereich von 10 nm bis 40 nm, erzielt werden können.

Die Grundierungsschicht weist insbesondere eine Schichtdicke der getrockneten Schicht in einem Bereich von 0,1 µm bis 5 µm, vorzugsweise in einem Bereich von 0,5 µm bis 3 µm und/oder in einem Bereich von 0,1 µm bis 0,8 µm, auf. Eine Schichtdicke der getrockneten Schicht in einem Bereich von 0,1 µm bis 0,8 µm ist insbesondere zweckmäßig, wenn die Transferfolie eine Kaltprägefolie ist. Eine Schichtdicke der getrockneten Schicht in einem Bereich von 0,5 µm bis 3 µm ist insbesondere zweckmäßig, wenn die Transferfolie eine Heißprägefolie ist.

Mittels der Grundierungsschicht ist es möglich, dass vorzugsweise während des Applikationsverfahrens und insbesondere auch nach dem Applikationsverfahren eine ausreichende Haftung der Transferlage auf dem Substrat oder dem Zielobjekt gewährleistet wird.

Bevorzugt ist es möglich, dass die Grundierungsschicht ein oder mehrere der folgenden Materialen umfasst oder daraus besteht: Polyurethane, Polyester, Polyamide, Polycarbonate, Polyharnstoffe, Polyacrylate und/oder deren Copolymere, Polymethacrylate und/oder deren Copolymere, Kohlenwasserstoffharze, Schellack, Alkydharze, Kolophoniumharze, Ketonharze, Phenolharze, Polystyrolharze, Epoxidharze, Maleinatharze, Melaminharze, Formaldehydharze, Polyvinylacetate, Ethylen-Vinylacetat-Copolymere, Polyvinylchlorid, Nitrocellulose, Polyolefine, modifizierte Polyolefine und/oder Weichmacher und/oder Farbstoffe und/oder organische und/oder anorganische Pigmente und/oder Mattierungsmittel.

Zweckmäßigerweise wird die Grundierungsschicht als eine der ein oder mehreren Schichten der Transferlage mittels eines Druckverfahrens und/oder mittels Gießens und/oder mittels Rakels aufgebracht. Beispielsweise wird die Grundierungsschicht in einem Tiefdruckverfahren aufgebracht. Es ist zudem möglich, dass die Grundierungsschicht mit einem Auftragsgewicht der trockenen Schicht im Bereich von 0,2 g/m² bis 5,0 g/m² aufgebracht wird, bevorzugt wobei bei Kaltprägeapplikationen die Grundierungsschicht mit einem Auftragsgewicht der getrockneten Schicht im Bereich von 0,2 g/m² bis 1,0 g/m² aufgebracht wird und bei Heißprägeapplikationen die Grundierungsschicht mit einem Auftragsgewicht der getrockneten Schicht im Bereich von 0,5 g/m² bis 5,0 g/m² aufgebracht wird.

Je nach Anwendung, kann beispielsweise eine Haftvermittlerschicht zwischen dem alkalisch löslichen Topcoat und der Metallschicht vorgesehen sein. Durch den Haftvermittler wird die Haftung zwischen Topcoat und Metallschicht erhöht.

Insbesondere ist es möglich, dass die Haftvermittlerschicht eine Schichtdicke in einem Bereich von 0,01 µm bis 0,5 µm, vorzugsweise in einem Bereich von 0,01 µm bis 0,3 µm, aufweist. Die Haftvermittlerschicht umfasst oder besteht vorzugsweise aus ein oder mehrere der folgenden Materialen: Polyurethane, Polyester, Polyamide, Polycarbonate, Polyacrylate und/oder deren Copolymere, Polymethacrylate und/oder deren Copolymere, Kohlenwasserstoffharze, Alkydharze, Kolophoniumharze, Ketonharze, Phenolharze, Polystyrolharze, Epoxidharze, Polyvinylacetate, Ethylen-Vinylacetat-Copolymere, Polyvinylchlorid, Nitrocellulose, Polyolefine und/oder modifizierte Polyolefine.

Eine weitere Haftvermittlerschicht kann auch zwischen der Metallschicht und einer weiteren Schicht, welche auf der dem Topcoat abgewandten Seite der Metallschicht angeordnet ist, vorgesehen sein.

Die Ablöseschicht umfasst bevorzugt ein Material oder eine Materialkombination, ausgewählt aus: Wachse, Silikone, Polyurethane, fluorierte Verbindungen, fluorierte Fettsäuren, modifizierte Silikonwachse und Silikonharze, unmodifizierte Silikonwachse und Silikonharze, Polymere, bevorzugt Acrylat-Copolymere, Polyester-Copolymere, Polystyrol-Copolymere, Polycarbonat-Copolymere. Vorzugsweise ist die Ablöseschicht alkalisch unlöslich. Dies bietet den Vorteil, dass beim Recycling der Transferfolie, sich die Ablöseschicht nicht in der alkalischen Waschflüssigkeit löst. Damit wird vermieden, dass die alkalische Waschflüssigkeit nach dem Recyclingprozess aufwändig aufbereitet werden muss.

Vorzugsweise ist möglich, dass die Ablöseschicht eine Schichtdicke der getrockneten Schicht im Bereich von 0,001 µm bis 0,080 µm, bevorzugt von 0,004 µm bis 0,050 µm aufweist. Diese vergleichsweise geringe Dicke der Ablöseschicht erlaubt ein randscharfes und sauberes Ablösen der Transferlage von der Trägerfolie.

Vorzugsweise wird die Ablöseschicht mittels eines Tiefdruckverfahrens mit einem Auftragsgewicht der getrockneten Schicht im Bereich von 0,001 g/m² bis 0,060 g/m², bevorzugt von 0,005 g/m² bis 0,050 g/m² aufgebracht.

Insbesondere ist es vorteilhaft, wenn die Ablöseschicht transparent und/oder transluzent und/oder opak und/oder eingefärbt und/oder zumindest teilweise eingefärbt und/oder glasklar ausgebildet ist.

Insbesondere verbessert die Ablöseschicht die Übertragung der Transferlage in einem Applikationsprozess, beispielsweise in einem Transferverfahren und/oder Laminierverfahren und/oder In-Mould-Decoration-Verfahren, auf eine Substratoberfläche, indem damit bevorzugt die Ablösekraft zur Ablösung der Transferlage von der Trägerfolie verringert wird.

Die auf die Trägerfolie aufgebrachten Schichten, insbesondere die Ablöseschicht und die Transferlage, weisen vorteilhafterweise eine ausreichende Haftung untereinander und zur Trägerfolie auf, um insbesondere ein unkontrolliertes Ablösen der gesamten Transferlage oder einzelner Schichten dieser von der Trägerfolie, zum Beispiel beim Auf- und Abwickeln, beim Transport oder bei der Lagerung, zu vermeiden. Vorzugsweise liegt die Ablösekraft zur Ablösung der Transferlage von der Trägerfolie, insbesondere bei Temperaturen im Bereich von 15°C bis 35°C, in einem Bereich von 1 cN/cm bis 10 cN/cm, insbesondere bei Kaltprägefolien bevorzugt im Bereich von 1 cN/cm bis 3 cN/cm, und/oder insbesondere bei Heißprägefolien bevorzugt im Bereich von 2 cN/cm bis 5 cN/cm.

Die Ablösekräfte zwischen den einzelnen Transferlagenschichten, insbesondere dem alkalisch löslichen Topcoat und/oder der Metallschicht und/oder der Grundierungsschicht und/oder der Haftvermittlerschicht und/oder der Farbschicht, sind vorzugsweise größer als die Ablösekraft der Transferlage von der Trägerfolie. Hierdurch wird insbesondere ein vollständiger Übertrag der Transferlage auf das Substrat in den zu übertragenden Bereichen im Applikationsverfahren ermöglicht. Weiter wird ein Bruch oder Splitten der Transferlage beim Applikationsverfahren vermieden.

Es ist bevorzugt vorgesehen, dass die geringste Ablösekraft innerhalb oder zwischen zwei oder mehr Schichten der Transferlage mindestens doppelt so hoch ist wie die Ablösekraft der Transferlage von der Trägerfolie, insbesondere in einem Bereich von 10 cN/cm bis 100 cN/cm, bevorzugt mindestens 20 cN/cm bis 100 cN/cm, besonders bevorzugt mindestens 40 cN/cm bis 100 cN/cm, liegt.

Bevorzugt wird zur Messung der Ablösekraft der Transferlage von der Trägerfolie auf eine starre Oberfläche mit einer Länge von 25 cm und einer Breite von 10 cm ein doppelseitiges Klebeband blasenfrei vollflächig aufgeklebt. Anschließend wird ein Streifen der Transferfolie mit einer Länge von 30 cm und einer Breite von 10 cm mit der Seite der Transferlage auf das Klebeband blasenfrei so aufgeklebt, dass eine Lasche von 5 cm Folienüberstand verbleibt. Die aufgeklebte Transferfolie wird fest angedrückt, die überstehende Lasche an der Messeinheit einer Materialprüfmaschine des Typs Z005 der Firma ZwickRoell GmbH & Co. KG befestigt und die Trägerfolie mit einem Abzugswinkel von 90° und einer Geschwindigkeit von 50 cm/min abgezogen. Die hierbei notwendige Kraft wird gemessen und in cN pro cm Folienbreite angegeben.

Erfindungsgemäß umfasst der Topcoat zu mindestens 40% bis 100% ein Bindemittel oder Bindemittelgemisch, das in einer alkalischen Waschflüssigkeit, insbesondere Lauge oder alkalischen Lösung, mit einem pH-Wert größer als 8,5 zu mindestens 50% löslich ist. Insbesondere werden solche Bindemittel als ASR (ASR = Alkali-Soluble Resins) bezeichnet und umfassen hydrophobe Bereiche als auch Carbonsäure-Gruppen. Diese funktionellen Gruppen werden mit steigendem pH-Wert bei geeignetem alkalischen pH-Wert deprotoniert und erhöhen die Polarität des Polymers derart, dass es in einem polaren Lösungsmittel wie Wasser vollständig löslich wird oder zumindest als kolloidale Dispersion vorliegt. Die Deprotonierung ist ein reversibler Prozess. In neutralem Wasser (pH ∼ 7) oder sauren wässrigen Lösungen (pH kleiner als 7) ist das Bindemittel unlöslich, da bei protonierten Carbonsäuregruppen der hydrophobe Charakter des Bindemittels überwiegt.

Da es sich bei der Deprotonierung um einen reversiblen Prozess handelt, kann sich diese Eigenschaft auch vorteilhafterweise für das Aufbringen des alkalisch löslichen Topcoat zu eigen gemacht werden. Erfindungsgemäß ist vorgesehen, dass der Topcoat im wässrigen Zustand appliziert wird und anschließend getrocknet wird, wobei alkalische Zusätze vollständig oder zumindest teilweise herausgetrocknet werden. Durch das Heraustrocknen der alkalischen Zusätze wird der Topcoat fest.

Vorzugsweise ist vorgesehen, dass der wässrige Topcoat einen Festkörperanteil im Bereich von 5% bis 45%, bevorzugt im Bereich von 15% bis 30%, besonders bevorzugt im Bereich von 15% bis 25%, aufweist. Dadurch wird eine vorteilhafte Druckviskosität erreicht.

Es ist auch möglich, dass der Topcoat mit einem Auftragsgewicht der getrockneten Schicht im Bereich von 0,5 g/m² bis 20,0 g/m², vorzugsweise im Bereich von 0,8 g/m² bis 10,0 g/m², aufgebracht wird. Zum Aufbringen des Topcoat eigenen sich vorteilhafterweise insbesondere ein Schlitzdüsenverfahren oder ein Tiefdruckverfahren. Vorzugsweise wird der Topcoat direkt auf die Ablöseschicht aufgebracht, sodass der Topcoat als erste Schicht der Transferlage aufgebracht wird.

Ferner ist es möglich, dass der Topcoat transparent, semitransparent, transparent eingefärbt, eingefärbt, opak und/oder mattiert ist. Es ist auch möglich, dass der Topcoat eine Schichtdicke der getrockneten Schicht im Bereich von 0,2 µm bis 20 µm, vorzugsweise im Bereich von 0,4 µm bis 8 µm, aufweist.

Wie eingangs bereits erwähnt, erfüllt der alkalisch lösliche Topcoat gleich mehrere Aufgaben. Zum einen kann die alkalische Löslichkeit des Topcoats vorteilhafterweise für das Aufbringen des Topcoats während des Herstellungsverfahrens genutzt werden. Beim Recycling-Verfahren hingegen wird diese alkalische Löslichkeit des Topcoats für die Trennung der Transferlage von der Trägerfolie genutzt. Nach der Applikation der Transferlage auf ein Zielsubstrat stellt der Topcoat die oberste Schicht dar und schützt somit die darunter liegenden Schichten der Transferlage, wie beispielsweise Metallschicht, Farbschicht und/oder Grundierungsschicht, vor äußeren Umwelteinflüssen.

Aufgrund der alkalischen Löslichkeit des Topcoats muss bevorzugt sichergestellt sein, dass der Topcoat nach der Applikation auf ein Zielsubstrat und somit im eigentlichen Einsatzgebiet dennoch eine ausreichende Beständigkeit aufweist. Wie bereits oben erwähnt, werden bei der Trocknung des wässrigen Topcoats alkalische Zusätze, wie Ammoniak oder Amine, vollständig oder zumindest teilweise, insbesondere Ammoniak überwiegend, herausgetrocknet. Nach dem Trocknen liegt der Topcoat, insbesondere das Bindemittel des Topcoats, vorzugsweise im protonierten Zustand vor. In diesem Zustand ist der Topcoat, insbesondere das Bindemittel des Topcoats, hydrophob und somit wasserunlöslich. Für den Einsatz des alkalisch löslichen Topcoats für Transferdekorationen auf grafische Verpackungen, Grußkarten, Etiketten oder Magazinen ist eine geringe bis keine Löslichkeit des Topcoats bei Kontakt mit Feuchtigkeit oder neutralem Wasser erforderlich, um eine Beschädigung im Alltagsgebrauch zu bestehen. Unter Feuchtigkeit ist hier beispielsweise auch der Schweiß einer Person zu verstehen, mit dem der Topcoat bei Berührung der beispielsweise Grußkarte oder des Magazins in Kontakt kommt.

Die Beständigkeit des alkalisch löslichen Topcoats wurde hierzu in Laborversuchen überprüft.

In einem ersten Versuch wurde eine auf ein wasserbeständiges Substrat applizierte Transferlage mit alkalisch löslichen Topcoat bei einer einstündigen Einwirkung in neutralem Wasser mit einem pH-Wert im Bereich von 6 bis 7 auf mögliche Veränderungen untersucht. Nach der Einwirkung im Wasser wurde die Transferlage bzw. der alkalisch lösliche Topcoat mit einem Baumwolltuch abgewischt und anschließend für eine Dauer von einer Stunde bei Umgebungsbedingungen mit einer Temperatur von 25°C und einer relativen Luftfeuchtigkeit im Bereich von 40% bis 60% getrocknet. Vorteilhafterweise wurden keine visuell wahrnehmbaren Veränderungen des alkalisch löslichen Topcoats festgestellt.

In einem zweiten Versuch wurde die Beständigkeit des alkalisch löslichen Topcoats gegen Abrieb untersucht. Hierzu wurde ein sogenannter Crockmeter-Test nach AATCC Test Methode 8 durchgeführt, welcher vorzugsweise aus der Textilbranche bekannt ist. Zunächst wurde die Transferlage mit dem alkalisch löslichen Topcoat auf ein wasserbeständiges Substrat aufgebracht. Hierfür eignet sich vorzugsweise ein Substrat aus ABS (=Acrylnitril-Butadien-Styrol). Anschließend wurden zehn vollständige Reibbewegungen auf der Oberfläche des alkalisch löslichen Topcoats mit einem trocknen bzw. befeuchteten Baumwolltuch unter vertikaler Krafteinwirkung von 5 N durchgeführt. Das befeuchtete Baumwolltuch weist dabei einen pH-Wert von 6 bis 7 auf. Auch in diesem Versuch wurden keine visuell wahrnehmbaren Veränderungen des alkalisch löslichen Topcoats festgestellt.

Die ersten beiden Versuche betreffen die Beständigkeit des Topcoats nach der Applikation auf ein Substrat. Es ist jedoch auch vorzugsweise vorgesehen, dass die thermische Beständigkeit des Topcoats, insbesondere bei einer Heißprägeapplikation, ausreichend gut ist, um nicht zu erweichen und somit ggf. die Integrität des dünnen Metallspiegels zu erhalten. Vorzugsweise ist der Metallspiegel in Form einer bedampften Metallschicht ausgeführt. Ein Erweichen des alkalisch löslichen Topcoats beim Heißprägen würde dazu führen, dass der Topcoat eintrübt und somit der Glanz der darunterliegenden Metallschicht für einen Betrachter nicht mehr wahrnehmbar ist. Aus diesem Grund wurde in einem dritten Versuch die thermische Beständigkeit des alkalisch löslichen Topcoats während der Heißprägeapplikation im Vergleich zu herkömmlichen lösungsmittelbasierten Topcoats untersucht. Hierzu wurden Heißprägungen auf einer Heißpräge-Hubmaschine Yuheng MK920 mit einer Stempeltemperatur von 130°C und einem Durchsatz von 4000 Bögen pro Stunde jeweils für die erfindungsgemäße Transferfolie und herkömmlichen Transferfolien mit lösungsmittelbasierten Topcoat durchgeführt. Die visuelle Prüfung ergab, dass der Glanz und die Reflexion des Metallspiegels inklusive des alkalischen löslichen Topcoats nahezu identisch zu einer herkömmlichen Transferfolie mit lösungsmittelbasierten Topcoat ist.

Die beschriebenen Versuche haben gezeigt, dass der alkalisch lösliche Topcoat hinsichtlich visuell wahrnehmbarer Veränderungen eine ähnliche Beständigkeit aufweist, wie herkömmliche lösungsmittelbasierte Topcoats. Somit können mit der erfindungsgemäßen Transferfolie applizierte bzw. dekorierte Artikel oder Substrate für alltägliche Anwendungen eingesetzt werden. Beispielsweise kann eine dekorierte Verpackung eines in einem Kühlschrank zu kühlenden Produkts bzw. Lebensmittel verwendet werden. Die Tests haben gezeigt, dass der alkalisch lösliche Topcoat eine ausreichende Beständigkeit gegen beispielsweise auftretendes Kondenswasser im Kühlschrank aufweist.

Das erfindungsgemäße Verfahren eignet sich insbesondere zum Recycling von Transferfolien, deren Transferlagen aus anderen Materialien bestehen als die Trägerfolie. Ein solches Verfahren bietet den Vorteil, dass verbrauchte Transferfolien nicht weggeworfen, sondern wiederaufbereitet werden, sodass weitere Lebenszyklen entstehen. Die erfindungsgemäße Transferfolie und/oder das erfindungsgemäße Herstellungsverfahren und/oder die in dem erfindungsgemäßen Recycling-Verfahren verwendete Transferfolie ist bevorzugt nach dem Prinzip "Design for Recycling (DfR)" hergestellt und aufgebaut. Dies bietet erhebliche wirtschaftliche und ökologische Vorteile, da auf die Herstellung neuer Kunststoffe verzichtet werden kann. Durch das Entfernen der Transferlage erhält man möglichst reines Kunststoffmaterial, welches zur Herstellung neuer Trägerfolie und/oder anderer Kunststoffbauteile verwendet werden kann.

Im Folgenden wird die Erfindung anhand von mehreren Ausführungsbeispielen unter Zuhilfenahme der beiliegenden Zeichnungen beispielhaft erläutert. Die gezeigten Ausführungsbeispiele sind daher nicht einschränkend zu verstehen.
- Fig. 1: zeigt eine schematische Darstellung einer Transferfolie
- Fig. 2: zeigt eine schematische Darstellung einer Transferfolie
- Fig. 3: zeigt eine schematische Darstellung einer Transferfolie
- Fig. 4: zeigt eine schematische Darstellung einer Transferfolie
- Fig. 5: zeigt eine schematische Darstellung eines Recyclingprozesses von einer Transferfolie
- Fig. 6: zeigt eine schematische Darstellung eines Recyclingprozesses von einer Transferfolie
- Fig. 7: zeigt eine schematische Darstellung eines Recyclingprozesses von einer Transferfolie
- Fig. 8: zeigt eine schematische Darstellung eines Recyclingprozesses von einer Transferfolie
- Fig. 9: zeigt eine schematische Darstellung eines Recyclingprozesses von einer Transferfolie
- Fig. 10: zeigt eine schematische Darstellung eines Recyclingprozesses von einer Transferfolie im Rolle-zu-Rolle-Verfahren

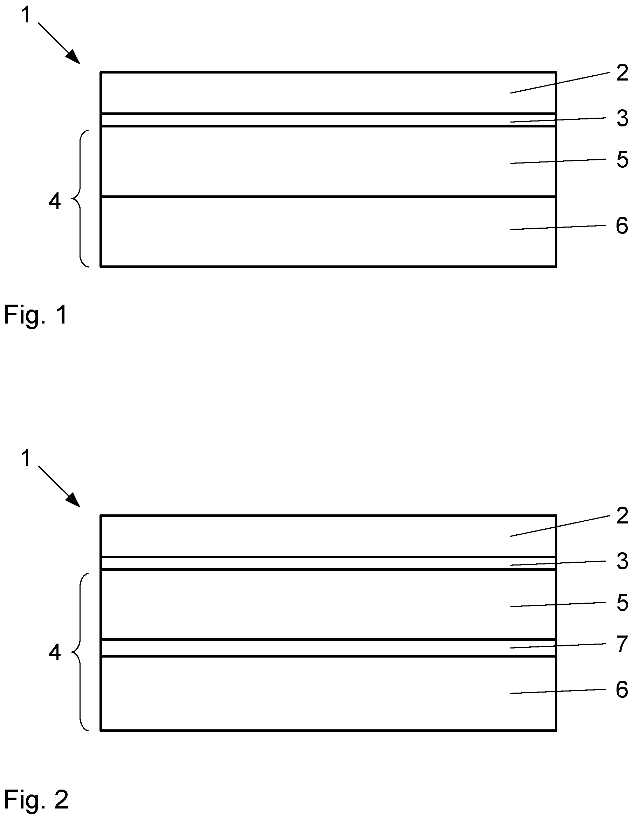

Die Figur 1 zeigt eine schematische Darstellung einer Transferfolie 1. Die Transferfolie 1 ist vorzugsweise eine recyclingfähige Transferfolie 1, insbesondere eine in einer alkalischen Waschflüssigkeit 9 bzw. Lauge recyclingfähige Transferfolie 1. Die Transferfolie 1 weist eine Trägerfolie 2, eine Ablöseschicht 3 und eine auf der Ablöseschicht 3 aufgebrachte Transferlage 4 auf. Als erste Schicht bzw. oberste Schicht weist die Transferlage 4 einen alkalisch löslichen Topcoat 5 auf. Als erste Schicht der Transferlage 4 ist dabei diejenige Schicht zu verstehen, die bei der Herstellung der Transferfolie 1 als erstes aufgetragen wird. Alternativ ist die oberste Schicht der Transferlage 4 diejenige Schicht zu verstehen, die nach der Applikation der Transferlage 4 auf ein Zielsubstrat die oberste Schicht der Transferlage 4 bildet. Der alkalische lösliche Topcoat 5 ist dabei, insbesondere direkt, auf der Ablöseschicht 3 angeordnet. Die Transferlage 4 der Transferfolie 1 gemäß Fig. 1 weist zudem noch eine Grundierungsschicht 6 auf, welche unter dem Topcoat 5 angeordnet ist.

Es ist hierbei also insbesondere möglich, dass unter einer auf der Trägerfolie 2 angeordneten Lage, wie beispielsweise der Transferlage 4, eine Lage zu verstehen ist, die nicht direkt in Kontakt mit der Trägerfolie 2 steht, sondern über ein oder mehrere weitere Schichten, wie beispielsweise über zumindest die Ablöseschicht 3, mit der Trägerfolie 2 verbunden ist.

Bei der in Fig. 1 gezeigten Transferfolie 1 handelt es sich um eine nicht metallisierte Heißprägefolie. Alternativ kann die Transferfolie 1 auch eine metallisierte Heißprägefolie, eine Kaltprägefolie oder eine Thermotransferfolie sein, wie dies beispielsweise in den nachfolgenden Ausführungsbeispielen weiter beschrieben ist.

Die Trägerfolie 2 wird vorzugsweise mittels Extrusion, insbesondere Flachfolienextrusion hergestellt. Die Schichtdicke der Trägerfolie 2 liegt vorzugsweise in einem Bereich von 4,5 µm bis 100 µm, bevorzugt in einem Bereich von 4,5 µm bis 12 µm. Es ist möglich, dass die Trägerfolie 2 farblos, transparent, glasklar, opak, eingefärbt, zumindest partiell eingefärbt oder farbig ist.

Die Trägerfolie 2 besteht insbesondere aus oder umfasst insbesondere Polyester. Bevorzugt umfasst die Trägerfolie 2 oder besteht aus ein oder mehreren Komponenten oder Kompositmaterialen ausgewählt aus Polyethylenterephathalat (PET), Polylactid, Polyethylenfuranoat, Polybutylenterephthalat, Polytrimethylenterephatalat, Polyethylennaphthalat, und/oder aus Polyestercarbonat, Cellophan, Celluloseacetat, Polyvinylchlorid, Polyimid, Polyvinylidenchlorid und/oder Papiere, insbesondere beschichtete und/oder laminierte Papiere.

Bei der in Fig. 1 gezeigten Trägerfolie 2 handelt es sich um eine PET-Trägerfolie 2, die in einer alkalischen Waschflüssigkeit 9 unlöslich ist. Die Trägerfolie 2 weist beispielsweise einen Hauptbestandteil, bevorzugt PET, auf. Vorzugsweise beträgt der Anteil dieses Hauptbestandteils, bevorzugt des PETs, in der Trägerfolie 2 mehr als 97%, bevorzugt mehr als 99,9%, besonders bevorzugt mehr als 99,97%.

Die Ablöseschicht 3 ist bevorzugt eine nicht-wasserlösliche Ablöseschicht. Nicht-wasserlösliche Ablöseschichten ermöglichen die Übertragung der Transferlage 4 im Applikationsverfahren auf eine Substratoberfläche und erlauben eine sehr genaue Kontrolle der Ablösekräfte und Erweichungstemperaturen. Die Ablöseschicht 3 weist insbesondere ein Material oder eine Materialkombination auf, ausgewählt aus: Wachse, Silikone, Polyurethane, fluorierte Verbindungen, fluorierte Fettsäuren, modifizierte Silikonwachse und Silikonharze, unmodifizierte Silikonwachse und Silikonharze, Polymere, bevorzugt Acrylat-Copolymere, Polyester-Copolymere, Polystyrol-Copolymere, Polycarbonat-Copolymere. Es ist auch möglich, dass die Ablöseschicht 3 fluorierte Verbindungen, wie Polytetrafluorethylen, und/oder fluorierte Fettsäuren und/oder modifizierte Silikonwachse und-harze und/oder unmodifizierte Silikonwachse und Silikonharze oder Kombinationen der vorgenannten Komponenten umfasst.

Ferner kann die Ablöseschicht 3 eine wässrige oder lösungsmittelbasierte Wachs-Ablöseschicht sein. Vorzugsweise ist die Ablöseschicht 3 alkalisch unlöslich. Dies bietet den Vorteil, dass beim Recycling der Transferfolie 1, sich die Ablöseschicht 3 nicht in der alkalischen Waschflüssigkeit 9 löst. Damit wird vermieden, dass die alkalische Waschflüssigkeit 9 nach dem Recyclingprozess aufwändig aufbereitet werden muss.

Bevorzugt weist die Ablöseschicht 3 eine Schichtdicke der getrockneten Schicht im Bereich von 0,001 µm bis 0,080 µm, bevorzugt von 0,004 µm bis 0,050 µm auf. Es ist bevorzugt vorgesehen, dass die Ablöseschicht 3 mittels eines Tiefdruckverfahrens mit einem Auftragsgewicht der getrockneten Schicht im Bereich von 0,001 g/m² bis 0,060 g/m², bevorzugt von 0,005 g/m² bis 0,050 g/m² aufgebracht wird.

Es ist insbesondere möglich, dass die Ablöseschicht 3 zumindest teilweise mit der Transferlage 4 übertragbar ist. In anderen Worten ist es möglich, dass die Ablöseschicht 3, falls es sich nicht um Ausschussware handelt, in einem Applikationsverfahren mit der Transferlage 4 auf ein Substrat übertragen wird oder wurde. Dies ist insbesondere abhängig von der Zusammensetzung der Ablöseschicht 3. Im Falle, dass die Ablöseschicht 3 zusammen mit der Transferlage 4 auf ein Zielsubstrat übertragen wird, ist es insbesondere vorgesehen, dass die Ablöseschicht 3 transparent ist.

Insbesondere verbessert die Ablöseschicht 3 die Übertragung der Transferlage 4 in einem Applikationsprozess, beispielsweise ausgewählt aus: Transferverfahren, Heißprägeverfahren, Kaltprägeverfahren, Laminierverfahren, Insert-Molding-Verfahren, In-Mould-Decoration-Verfahren, auf eine Substratoberfläche, indem damit bevorzugt die Ablösekraft zur Ablösung der Transferlage 4 von der Trägerfolie 2 eingestellt wird.

Insbesondere ist es vorgesehen, dass die Ablösekraft zur Ablösung der Transferlage 4 von der Trägerfolie 2, insbesondere bei Temperaturen im Bereich von 15°C bis 35°C, in einem Bereich von 1 cN/cm bis 10 cN/cm, insbesondere bei Kaltprägefolien bevorzugt im Bereich von 1 cN/cm bis 3 cN/cm, und/oder insbesondere bei Heißprägefolien bevorzugt im Bereich von 2 cN/cm bis 5 cN/cm, liegt.

Vorzugsweise ist es möglich, dass die geringste Ablösekraft innerhalb oder zwischen zwei oder mehr Schichten der Transferlage 4 mindestens doppelt so hoch ist wie die Ablösekraft der Transferlage 4 von der Trägerfolie 2, insbesondere in einem Bereich von 10 cN/cm bis 100 cN/cm, bevorzugt mindestens 20 cN/cm bis 100 cN/cm, besonders bevorzugt mindestens 40 cN/cm bis 100 cN/cm, liegt. Dies garantiert, dass die Haftung der einzelnen Schichten der Transferlage 4 ausreichend hoch ist, sodass ein Bruch oder Splitten der Transferlage 4 beim Applikationsverfahren vermieden wird.

Wie oben bereits erwähnt, ist der Topcoat 5 alkalisch löslich. D.h. sobald der Topcoat 5 in eine alkalische Waschflüssigkeit 9 bzw. Lauge gegeben wird, löst sich dieser darin. Der Topcoat 5 umfasst insbesondere zu mindestens 40% bis 100% ein Bindemittel oder Bindemittelgemisch, das in einer alkalischen Waschflüssigkeit 9, insbesondere Lauge oder alkalischen Lösung, mit einem pH-Wert größer als 8,5, bevorzugt größer als 10, zu mindestens 50%, bevorzugt zu mindestens 75%, löslich ist. Insbesondere werden solche Bindemittel als ASR (ASR = Alkali-Soluble Resins) bezeichnet und umfassen hydrophobe Bereiche als auch Carbonsäure-Gruppen. Diese funktionellen Gruppen werden mit steigendem pH-Wert bei geeignetem alkalischen pH-Wert deprotoniert und erhöhen die Polarität des Polymers derart, dass es in einem polaren Lösungsmittel wie Wasser vollständig löslich wird oder zumindest als kolloidale Dispersion vorliegt. Die Deprotonierung ist ein reversibler Prozess. In neutralem Wasser (pH ∼ 7) oder sauren wässrigen Lösungen (pH kleiner als 7) ist das Bindemittel unlöslich, da bei protonierten Carbonsäuregruppen der hydrophobe Charakter des Bindemittels überwiegt.

ASR erlauben die Formulierung umweltfreundlicher wasserbasierter Lacke, die per Definition weniger als 20% flüchtige organische Lösungsmittel (VOC = Volatile Organic Compounds) enthalten. Ein alkalischer pH-Wert kann durch Zugabe von Ammoniak NH₃ oder von Aminen eingestellt werden, bevorzugt wird Ammoniak eingesetzt, da dieses im Gegensatz zu Aminen nicht als VOC zählt und aufgrund des sehr niedrigen Siedepunkts von -33°C insbesondere in Tiefdruck-Lackierprozessen mit sehr hohen Geschwindigkeiten vollständig herausgetrocknet werden kann. Zur Verbesserung der Benetzung, des Verlaufs und der Filmbildung können bis zu 20% hydrophile organische Lösungsmittel zur Verbesserung der Filmbildung zugegeben werden, es kann sich z.B. um Alkohole oder Glykolether handeln.

Das alkalisch lösliche Bindemittel umfasst vorzugsweise alkalisch lösliche Acrylat-Polymere, welche typischerweise im Bereich Druckfarben oder beim Mahlen und Dispergieren von Pigmentpasten eingesetzt werden. Beispiele für kommerziell verfügbare alkalisch lösliche Acrylate sind NeoCryl BT-24 EU, NeoCryl BT-21, NeoCryl BT-100, NeoCryl BT-107-S, NeoCryl BT-101 ex. Covestro, und SOLURYL R-90, SOLURYL CE-1217 ex. Hanwha Chemical. Geeignete ASR weisen insbesondere ein Molekulargewicht unterhalb von 300000 g/mol, bevorzugt im Bereich 1000 bis 100000 g/mol, besonders bevorzugt im Bereich 1500 bis 60000 g/mol, auf.

Das alkalisch lösliche Acrylat verfügt bevorzugt über eine hohe Säurezahl, die auf Carbonsäure-Funktionen zurückgeht, welche in alkalischer wässriger Lösung anionische Gruppen ausbilden. Vorzugsweise beträgt die Säurezahl des alkalisch löslichen Acrylats, insbesondere des alkalisch löslichen Topcoats 5, mindestens 20 mg KOH/g, bevorzugt mindestens 50 mg KOH/g. Um eine geringe Beständigkeit des trockenen Lackfilms gegenüber der Einwirkung von neutralem Wasser zu vermeiden, liegt die Säurezahl des Polymers besonders bevorzugt im Bereich von 50 mg KOH/g bis 225 mg KOH/g. Das alkalisch lösliche Acrylat weist bevorzugt eine Glasübergangstemperatur im Bereich von 30°C bis 150°C, besonders bevorzugt im Bereich 50°C bis 150°C, auf. Bei Verwendung einer Mischung von zwei oder mehreren alkalisch löslichen Bindemitteln bezieht sich der Glasübergangstemperatur-Bereich auf den berechneten anteilsmäßig gewichteten Rechenwert.

Vorzugweise weist der wässrige Topcoat 5 einen Festkörperanteil im Bereich von 5% bis 45%, bevorzugt im Bereich von 15% bis 30%, besonders bevorzugt im Bereich von 15% bis 25%, auf, um eine vorteilhafte Druckviskosität zu erhalten. Vorzugsweise wird der Topcoat 5 mit einem Auftragsgewicht der getrockneten Schicht im Bereich von 0,5 g/m² bis 20,0 g/m², bevorzugt von 0,8 g/m² bis 10,0 g/m² mittels Tiefdruckverfahren oder Schlitzdüsenverfahren aufgebracht, insbesondere auf die Ablöseschicht 3, aufgebracht. Ferner ist bevorzugt vorgesehen, dass der Topcoat 5 im wässrigen Zustand appliziert wird und anschließend getrocknet wird, wobei alkalische Zusätze vollständig oder zumindest teilweise herausgetrocknet werden.

Bei der in Fig. 1 gezeigten Transferfolie 1 weist der Topcoat 5 bevorzugt eine Schichtdicke der getrockneten Schicht im Bereich von 0,2 µm bis 20,0 µm, vorzugsweise im Bereich von 0,4 µm bis 8 µm, auf.

Ferner kann der Topcoat 5 bevorzugt als weitere Bestandteile Mattierungsmittel und/oder lösliche Farbstoffe und/oder Pigmente enthalten, die einen Anteil im Bereich von 0% bis 60% aufweisen. Die Wahl der weiteren Bestandteile ist abhängig von der jeweiligen Anwendung bzw. der optischen Ausführung. Vorzugsweise ist der Topcoat 5 transparent, semitransparent, transparent eingefärbt, eingefärbt, opak und/oder mattiert. In Kombination mit einer nachfolgenden Metallschicht 7, wie beispielhaft in Fig.2,3 und 4 gezeigt ist, wird insbesondere ein metallischer Glanzeffekt erzeugt. Bei nicht-metallisierten Transferfolien, wie eine solche Transferfolie 1 in Fig. 1, werden vorzugsweise Pigmente eingesetzt, um insbesondere eine intensive Deckkraft der Transferlage 4 zur Substratoberfläche erreichen zu können.

Bevorzugt ist es vorgesehen, dass die Transferlage 4, insbesondere neben dem Topcoat 5, zumindest eine Metallschicht 7 und/oder zumindest eine Grundierungsschicht 6 und/oder zumindest eine Farbschicht und/oder zumindest eine Kleberschicht und/oder zumindest eine Haftvermittlerschicht 8 aufweist.

Bei der in Fig. 1 gezeigten Transferfolie 1 weist die Transferlage 4 neben dem Topcoat 5 noch eine Grundierungsschicht 6 auf. Die Grundierungsschicht 6 ermöglicht die Haftung der Transferlage 4 zum Zielsubstrat im Applikationsverfahren. Bevorzugt weist die Grundierungsschicht 6 eine Schichtdicke der getrockneten Schicht im Bereich von 0,1 µm bis 5,0 µm, vorzugsweise in einem Bereich von 0,5 µm bis 3 µm, auf, wobei bevorzugt bei Kaltprägeapplikationen die Grundierungsschicht 6 eine Schichtdicke der getrockneten Schicht im Bereich von 0,1 µm bis 0,8 µm aufweist und bei Heißprägeapplikationen die Grundierungsschicht 6 eine Schichtdicke der getrockneten Schicht im Bereich von 0,5 µm bis 3 µm aufweist. Bei der in Fig. 1 gezeigten Transferfolie 1, handelt es sich, wie oben erwähnt, um eine Heißprägefolie. Demnach weist die Grundierungsschicht 6 der Transferfolie 1 gemäß Fig. 1 eine Schichtdicke der getrockneten Schicht im Bereich von 0,5 µm bis 3 µm auf. Ferner handelt sich in diesem Fall um eine thermisch aktivierbare Grundierungsschicht 6, welche insbesondere durch die thermische Energie eines Prägestempels und/oder einer Prägewalze während des Applikationsprozesses der Transferlage 4 auf ein Zielsubstrat aktiviert wird.

In einigen Fällen bei nicht-metallisierten Transferfolien, wie beispielsweise in Fig. 1 gezeigt, kann die Grundierungsschicht 6 mit der Schutzlackschicht vereint werden. In diesem Falle wäre diese vereinte Schicht wasserbasiert und würde daher beim Recyclingprozess in der alkalischen Waschflüssigkeit 9 bzw. der Lauge gelöst werden, sodass beim Recycling lediglich die Trägerfolie 2 ggf. mit Ablöseschicht 3 und die alkalische Waschflüssigkeit 9 als Produkte übrigbleiben. Bei der in Fig. 1 gezeigten Transferfolie 1 ist die Grundierungsschicht 6 jedoch alkalisch unlöslich. Dies bietet den Vorteil, dass beim Recycling der Transferfolie 1, sich die Grundierungsschicht 6 nicht in der alkalischen Waschflüssigkeit 9 löst. Damit wird vermieden, dass die alkalische Waschflüssigkeit 9 nach dem Recyclingprozess aufwändig aufbereitet werden muss.

Bevorzugt ist vorgesehen, dass die Grundierungsschicht 6 ein oder mehrere der folgenden Materialen umfasst oder daraus besteht: Polyurethane, Polyester, Polyamide, Polycarbonate, Polyharnstoffe, Polyacrylate und/oder deren Copolymere, Polymethacrylate und/oder deren Copolymere, Kohlenwasserstoffharze, Schellack, Alkydharze, Kolophoniumharze, Ketonharze, Phenolharze, Polystyrolharze, Epoxidharze, Maleinatharze, Melaminharze, Formaldehydharze, Polyvinylacetate, Ethylen-Vinylacetat-Copolymere, Polyvinylchlorid, Nitrocellulose, Polyolefine, modifizierte Polyolefine und/oder Weichmacher und/oder Farbstoffe und/oder organische und/oder anorganische Pigmente und/oder Mattierungsmittel.

Bevorzugt wird die Grundierungsschicht 6 mittels eines Druckverfahrens und/oder mittels Gießens und/oder mittels Rakels aufgebracht wird.

In Figur 2 ist eine schematische Darstellung einer weiteren Transferfolie 1, insbesondere recyclingfähigen Transferfolie 1, dargestellt. Bei der in Figur 2 gezeigten Transferfolie 1 handelt es sich um eine metallisierte Heißprägefolie. Der Schichtaufbau der in Figur 2 gezeigten Transferfolie 1 ist dabei identisch zu dem Schichtaufbau der Transferfolie 1 aus Figur 1, jedoch mit dem Unterschied, dass zwischen der Grundierungsschicht 6 und dem Topcoat 5 weiter eine Metallschicht 7 angeordnet ist. Die Metallschicht 7 sorgt für einen metallischen Glanz- und Spiegeleffekt, welcher von einem Betrachter wahrnehmbar ist. Somit umfasst die Transferlage 4 der in Figur 2 gezeigten Transferfolie 1 einen Topcoat 5, eine Metallschicht 7 und eine Grundierungsschicht 6.

Vorzugsweise weist die Metallschicht 7 eine Schichtdicke in einem Bereich von 5 nm bis 50 nm, bevorzugt in einem Bereich von 10 nm bis 40 nm, auf. Vorzugsweise umfasst die Metallschicht 7 Materialien und/oder Verbindungen, bevorzugt mit hohem Brechungsindex, einzeln oder als Legierung aus mindestens zwei dieser Materialien oder als Eutektikum ausgewählt aus: Aluminium, Chrom, Silber, Gold, Kupfer, Nickel, Zinn, Indium, Siliziumoxid, Magnesiumoxid, Titanoxid, Aluminiumoxid, Zinkoxid, Zinksulfid.

Ferner ist bevorzugt vorgesehen, dass die Metallschicht 7 transparent oder opak ist.

Insbesondere ist es möglich, dass die Metallschicht 7 als eine der ein oder mehreren Schichten der Transferlage 4 mittels Vakuum-Bedampfung aufgebracht wird, insbesondere wobei die Metallschicht 7 mit einer Schichtdicke im Bereich von 5 nm bis 50 nm, bevorzugt im Bereich von 10 nm bis 40 nm, aufgebracht wird.

Sofern die Metallschicht 7 aus einem unedlen Metall gebildet ist, ist die Metallschicht 7 bevorzugt alkalisch löslich. Bei der Verwendung unedler Metalle, wie beispielsweise Aluminium, als Metallschicht 7, geht die Metallschicht 7 bei Kontakt mit der alkalischen Waschflüssigkeit 9 bzw. Lauge in Lösung. Dabei wird Wasserstoff (H₂) freigesetzt, welcher aus Gründen der Prozesssicherheit vorzugsweise mittels thermischer Verwertung, Lüften und/oder Absaugen aus dem Prozess entfernt wird.

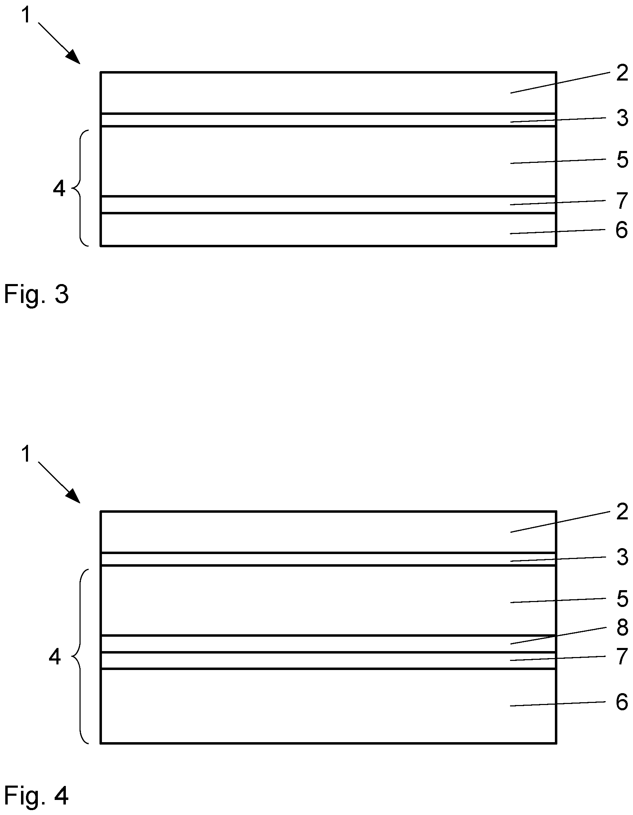

In Figur 3 ist eine schematische Darstellung einer weiteren Transferfolie 1, insbesondere recyclingfähigen Transferfolie 1, dargestellt. Bei der in Figur 3 gezeigten Transferfolie 1 handelt es sich um eine metallisierte Kaltprägefolie. Der Schichtaufbau der in Figur 3 gezeigten Transferfolie 1 ist dabei identisch zu dem Schichtaufbau der Transferfolie 1 aus Figur 2, jedoch mit dem Unterschied, dass die Schichtdicke der Grundierungsschicht 6 geringer ist.

In diesem Fall weist die Grundierungsschicht 6 eine Schichtdicke der getrockneten Schicht im Bereich von 0,1 µm bis 0,8 µm auf. Anders als bei der Heißprägefolie gemäß Fig. 2 handelt es sich bei der Grundierungsschicht 6 nicht um einen thermisch aktivierbaren Kleber.

Insbesondere bei einem Transferverfahren in Form von Kaltprägen wird vorzugsweise über ein Druckverfahren, wie beispielsweise insbesondere Offsetdruck und/oder Flexodruck und/oder Siebdruck und/oder Tintenstrahldruck, auf das Substrat eine Kleberschicht in Form eines Dekorationsmotivs aufgetragen. Anschließend wird Transferfolie 1 vorzugsweise in einem Temperaturbereich von 10°C bis 40°C, bevorzugt in einem Bereich von 15°C bis 30°C, auf das Substrat appliziert und daraufhin insbesondere die Trägerfolie 2 abgezogen. Ist die Haftkraft der Kleberschicht zur Transferlage 4 größer als die Ablösekraft der Transferlage 4 zur Trägerfolie 2, so kommt es zum Transfer der Transferlage 4 zum Substrat.

Beim Abziehen der Trägerfolie 2 verbleibt die Transferlage 4 also insbesondere in Bereichen mit der Kleberschicht am Substrat und wird dort von der Trägerfolie 2 abgelöst. Für die Kleberschicht werden insbesondere oxidativ und/oder strahlenhärtende Kleber verwendet.

Die oben erwähnte Grundierungsschicht 6 hat bei dem Kaltprägeprozess die Aufgabe, die genannte Haftung zwischen Transferlage 4 und Kleberschicht zu verbessern.

In Figur 4 ist eine schematische Darstellung einer weiteren Transferfolie 1, insbesondere recyclingfähigen Transferfolie 1, dargestellt. Bei der in Figur 4 gezeigten Transferfolie 1 handelt es sich um eine metallisierte Heißprägefolie. Der Schichtaufbau der in Figur 4 gezeigten Transferfolie 1 ist dabei identisch zu dem Schichtaufbau der Transferfolie 1 aus Figur 2, jedoch mit dem Unterschied, dass zwischen der Metallschicht 7 und dem Topcoat 5 weiter eine Haftvermittlerschicht 8 angeordnet ist.

Die Haftvermittlerschicht 8 umfasst oder besteht bevorzugt aus ein oder mehrere der folgenden Materialen: Polyurethane, Polyester, Polyamide, Polycarbonate, Polyacrylate und/oder deren Copolymere, Polymethacrylate und/oder deren Copolymere, Kohlenwasserstoffharze, Alkydharze, Kolophoniumharze, Ketonharze, Phenolharze, Polystyrolharze, Epoxidharze, Polyvinylacetate, Ethylen-Vinylacetat-Copolymere, Polyvinylchlorid, Nitrocellulose, Polyolefine und/oder modifizierte Polyolefine.

Vorzugsweise weist die Haftvermittlerschicht 8 eine Schichtdicke in einem Bereich von 0,01 µm bis 0,5 µm, vorzugsweise in einem Bereich von 0,01 µm bis 0,3 µm auf. Die Haftvermittlerschicht 8 verbessert die Haftung zwischen Topcoat 5 und Metallschicht 7. Die Haftvermittlerschicht 8 ist jedoch nur eine optionale Schicht, welche bei bestimmten Metallen erforderlich ist. Bei einer Aluminiumbeschichtung beispielsweise ist eine Haftvermittlerschicht 8 nicht zwingend erforderlich.

Anstelle einer Haftvermittlerschicht 8 kann der Topcoat 5 auch mehrlagig ausgeführt sein. In einem solchen Fall sind bevorzugt alle Schichten des mehrlagigen Topcoats alkalisch löslich, jedoch kann die im Kontakt mit der Metallschicht stehende Lage des Topcoats neben einem ASR als Bestandteil mit einem Anteil von 40% bis 100% im Auftragsgewicht der getrockneten Schicht auch einen Anteil von bis zu 60% einer wasserbasierten Emulsion oder Dispersion eines oder mehrerer der folgenden Materialen enthalten, um eine gezielte Haftung zur Metallgrenzfläche einzustellen ohne die Zusammensetzung des darüberliegenden Topcoats zu ändern: Polyurethane, Polyester, Polyamide, Polycarbonate, Polyacrylate und/oder deren Copolymere, Polymethacrylate und/oder deren Copolymere, Kohlenwasserstoffharze, Alkydharze, Ketonharze, Phenolharze, Polystyrolharze, Epoxidharze, Polyvinylacetate, Ethylen-Vinylacetat-Copolymere, Polyvinylchlorid, Celluloseester, Polyolefine und/oder modifizierte Polyolefine.

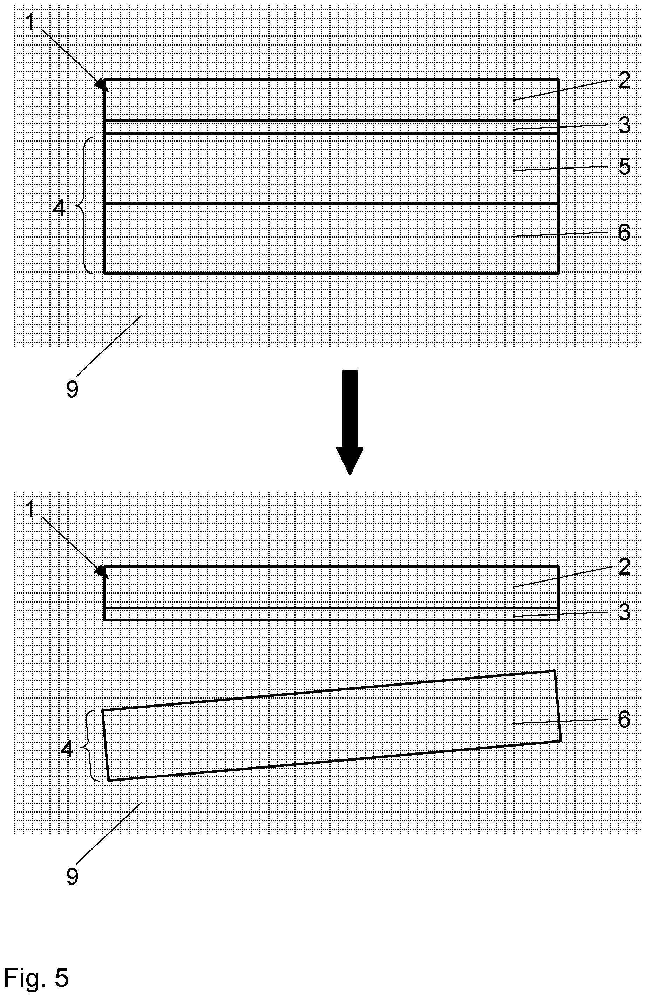

Figur 5 zeigt ein beispielhaftes Verfahren zum Recycling einer Transferfolie 1, aufweisend eine Trägerfolie 2 und eine zumindest teilweise auf der Trägerfolie 2 angeordneten Transferlage 4, wobei zwischen der Trägerfolie 2 und der Transferlage 4 eine Ablöseschicht 3 angeordnet ist. Die Transferlage 4 weist einen alkalisch löslichen Topcoat 5 und eine Grundierungsschicht 6 auf, wobei der Topcoat 5 auf der Ablöseschicht 3 angeordnet ist. Zum Recycling der Transferfolie 1 wird der folgende Schritt durchgeführt:
x) Auflösen 10 des alkalisch löslichen Topcoats 5, insbesondere des alkalisch löslichen Bindemittels des Topcoats 5, mittels einer alkalischen Waschflüssigkeit 9, vorzugsweise in einem Waschflüssigkeitsbad, wobei die Transferlage 4 von der Trägerfolie 2 abgelöst wird.

Insbesondere wird die Trägerfolie 2 während Schritt x) mittels der alkalischen Waschflüssigkeit 9 bzw. Lauge gereinigt. Hierzu wird die Transferfolie 1 insbesondere von der Transferlage 4 befreit, sodass im Wesentlichen die Trägerfolie 2 nach dem Schritt x) verbleibt. Es ist dabei möglich, dass die Ablöseschicht 3 auf der Trägerschicht verbleibt. Da die Schichtdicke der Ablöseschicht 3 im Vergleich zur Schichtdicke der Trägerfolie 2 vernachlässigbar gering ist, hat die verbleibende Ablöseschicht 3 keine negative Auswirkung für den weiteren Recyclingprozess. Vielmehr ist gewährleistet, dass selbst wenn die Ablöseschicht 3 nach dem Schritt x) auf der Trägerfolie 2 verbleibt, dass nach dem Schritt x) die Trägerfolie 2 und/oder das Material der Trägerfolie 2, eine Reinheit im Bereich von 99,0 Gew.-% bis 100,0 Gew.-% aufweist. Dies bedeutet im Falle einer Trägerfolie 2 aus PET, dass die aus dem Recyclingprozess gewonnene Trägerfolie 2 zu 99% bis 100% aus reinem PET besteht. Somit weist das recycelte Material bevorzugt annähernd dieselben Materialeigenschaften wie neugewonnenes Material auf.

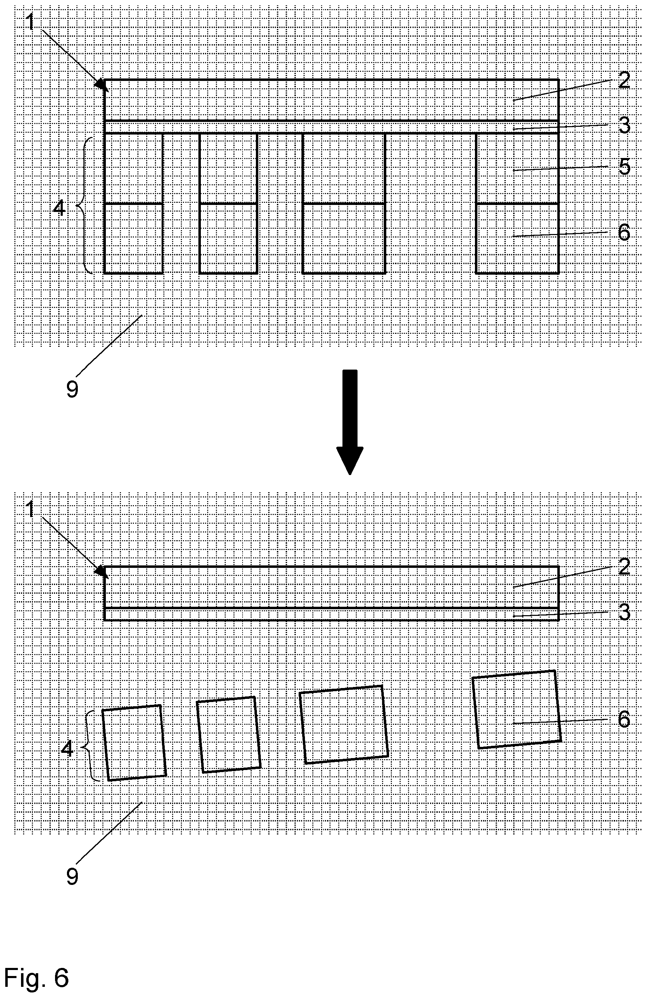

Mit einer wie in Fig. 5 und 6 beispielhaft gezeigten Trägerfolie 2 ist es insbesondere möglich, dass die Trägerfolie 2 als Ganzes durch die alkalische Waschflüssigkeit 9 geführt wird. Dabei ist es möglich, dass die Transferlage 4 ebenfalls als Ganzes auf der Trägerfolie 2 vorliegt, beispielsweise wenn die Transferfolie 1 Ausschussware darstellt, oder, dass die Transferlage 4 in der Form von Transferlagenbestandteilen auf der Trägerfolie 2 vorliegt. Die Transferlagenbestandteile sind beispielsweise die Resttransferlage, die nach einer teilweisen Übertragung der Transferlage 4 auf ein Substrat auf der Trägerlage verblieben ist. Es ist alternativ jedoch auch möglich, dass die Transferfolie 1 zuvor mittels einer Zerkleinerungsvorrichtung zerkleinert wird, sodass Schnittmaterial entsteht, welches in die alkalische Waschflüssigkeit 9 gegeben wird. Unter der Trägerfolie 2 wird daher vorzugsweise sowohl die Trägerfolie 2 als Ganzes als auch eine Mehrzahl von Trägerfolienschnitte verstanden. Unter der Transferlage 4 ist vorzugsweise sowohl die Transferlage 4 als Ganzes als auch eine Mehrzahl von Transferlagenschnitte zu verstehen.

Die Transferfolie 1 weist, vorzugsweise vor dem Schritt x), insbesondere einen Aufbau, der zu Figuren 1 bis 4 beschreiben ist, auf.

Wie in Fig. 6 zu sehen ist, ist es möglich, dass die Transferlage 4 in Bereichen nicht vorhanden ist, in welchen die Ablöseschicht 3 vorhanden ist. Hierbei wurde die Trägerfolie 2 mit der Ablöseschicht 3 beispielsweise in einem vorhergehenden Applikationsprozess zum Übertragen der Transferlage 4 auf ein Zielsubstrat in diesen Bereichen von der Transferlage 4 abgelöst. Weiter ist es möglich, dass die Ablöseschicht 3 bei einem vorhergehenden Applikationsprozess mit der Transferlage 4 auf ein Zielsubstrat übertragen wurde, sodass die Ablöseschicht 3 vor dem Schritt x) in den Bereichen ohne Transferlage 4 nicht vorhanden ist. Mit der Transferlage 4 auf ein Substrat übertragene Ablöseschichten weisen vorzugsweise ein hohes Maß an Transparenz, insbesondere einen Transmissionsgrad von 95% bis 100%, vorzugsweise in einem Wellenlängenbereich von 350 nm bis 800 nm, insbesondere gemittelt über diesen Wellenlängenbereich, auf.

In Schritt x) dringt die alkalische Waschflüssigkeit 9 bzw. Lauge beispielsweise über Schnittkanten und/oder Bruchkanten in die Transferfolie 1, insbesondere in die Transferlage und/oder zwischen Trägerfolie und Transferlage, ein und/oder diffundiert durch alkalisch unlösliche Transferlagenschichten und beginnt den alkalisch löslichen Topcoat 5 bei Kontakt mit der alkalischen Waschflüssigkeit 9 bzw. Lauge zu lösen. Weiterhin entstehen während der Applikation bzw. Folienverarbeitung Mikrobeschädigungen in der Transferlage 4, insbesondere Mikrorisse. Durch diese Mikrorisse kann die alkalische Waschflüssigkeit 9 bzw. Lauge auch vorteilhaft in die Transferfolie, insbesondere in die Transferlage und/oder zwischen Trägerfolie und Transferlage, eindringen. Da der Topcoat ein vergleichsweise hohes Auftragsgewicht der getrockneten Schicht bzw. eine vergleichsweise hohe Schichtdicke bezogen auf die restlichen Schichten der Transferlage 4 aufweist, ist die Reaktionsfläche, über die die alkalische Waschflüssigkeit 9 in den Topcoat 5 eindringt vergleichsweise groß. Dies wirkt sich vorteilhaft auf den Auflöseprozess aus und beschleunigt das Auflösen 10 des Topcoats 5, insbesondere des alkalisch löslichen Bindemittels des Topcoats 5. Vorzugsweise quillt der Topcoat 5 bei Berührung mit der alkalischen Waschflüssigkeit 9 bzw. der Lauge auf, sodass das Abtrennen der restlichen Transferlage 4 von der Trägerfolie 2 weiter begünstigt wird.

Wie in den Figuren 5 und 6 gezeigt, löst sich der Topcoat 5, insbesondere das alkalisch lösliche Bindemittel des Topcoats 5, vollständig in der alkalischen Waschflüssigkeit 9, sodass die getrennte Trägerfolie 2 und die restlichen Transferlagenschichten verbleiben. Die restlichen Transferlagenbestandteile treten bevorzugt in Form von Partikeln auf. Somit bilden die Partikel in der Waschflüssigkeit 9 ein heterogenes Gemisch aus, wohingegen der gelöste Topcoat 5 in der Waschflüssigkeit 9 verbleibt und mit dieser ein homogenes Gemisch ausbildet. Vorzugsweise gehen die Schichten der Transferlage 4, die nicht der Topcoat 5 sind, nicht in Lösung. Wie oben erwähnt, können jedoch bei Verwendung unedler Metalle als Metallschicht 7, diese in Lösung mit der alkalischen Waschflüssigkeit 9 bzw. der Lauge gehen.

Die alkalische Waschflüssigkeit 9 kann beispielsweise eine wässrige alkalische Lösung, eine alkalische Lösung und/oder eine Lauge sein. Die alkalische Waschflüssigkeit 9 umfasst vorzugsweise eine oder mehrere Lösungen der nachfolgenden Lösungen: Lösungen von Alkalimetall- oder Erdalkalimetallhydroxiden, wie Kaliumhydroxid, Natriumhydroxid oder Caliumhydroxid; oder Erdalkalioxide, wie Calciumoxid oder Bariumoxid; oder Lösungen von Ammoniak oder Aminen.

In Figur 6 ist zudem schematisch gezeigt, dass die Transferlage 4 nach dem Trennen von der Trägerfolie 2 als Partikel in der alkalischen Waschflüssigkeit 9 vorliegt. Vorzugsweise ist es vorgesehen, dass während dem Schritt x) die Transferlage 4 in Partikel zerfällt, wobei die Partikel in der alkalischen Waschflüssigkeit 9 unlöslich sind, insbesondere wobei die Partikel bei einer ebenen Betrachtung der Partikel eine Größe im Bereich von 10 µm bis 50 mm, vorzugsweise im Bereich von 50 µm bis 5 mm, besonders bevorzugt im Bereich von 20 µm bis 5 mm, aufweisen. Bevorzugt können nach dem Schritt x) unlösliche Partikel der Transferlage 4 mittels eines Separationsverfahrens von der alkalischen Waschflüssigkeit 9 getrennt werden, insbesondere wobei das Separationsverfahren Filtration und/oder Zentrifugieren und/oder Sieben und/oder Dekantieren umfasst. Dadurch, dass bei dem erfindungsgemäßen Recyclingverfahren keine nanoskaligen Partikel entstehen, kann auf aufwendige Abtrennschritte, wie beispielsweise eine aufwendige Filtration zur Entfernung der nanoskaligen Partikel, verzichtet werden. Zudem ist dadurch ausgeschlossen, dass nanoskalige Partikel an der Trägerfolie 2 haften bleiben und somit die Reinheit des Rezyklats bzw. der Aufwand zur Erreichung einer gewissen Reinheit verbessert wird. Weiter wird insbesondere die Verwertbarkeit der alkalischen Waschflüssigkeit 9, der Wartungs- und Instandhaltungsaufwand sowie die Prozess-Sicherheit verbessert. Der alkalisch lösliche Topcoat 5 ermöglicht dies vorteilhafterweise dadurch, dass insbesondere zur Trennung der Transferlage 4 von der Trägerfolie 2 in Schritt x) keine oder nur besonders geringe mechanische Kräfte zum Einsatz kommen, die ein Abtrennen sehr feiner Partikel verursachen könnten.

Die Partikel liegen insbesondere in ungelöster Form in der alkalischen Waschflüssigkeit 9 vor und/oder die Partikel in der alkalischen Waschflüssigkeit 9 weisen den gesamten Schichtaufbau der Transferlage 4 abzüglich des in der Waschflüssigkeit 9 gelösten Topcoats 5 zusammenhängend auf. In anderen Worten ist es möglich, dass während Schritt x) der Schichtaufbau der Trägerfolie 2 und/oder der Transferlage 4 der Transferfolie 1 erhalten bleibt, da die Transferlage 4 in der alkalischen Waschflüssigkeit 9 unlöslich ist.

Da jedoch, wie oben erwähnt, sowohl der Topcoat 5 als auch ggf. die Metallschicht 7, bei Verwendung unedler Metalle, in Lösung mit der alkalischen Waschflüssigkeit 9 bzw. Lauge geht, ist es insbesondere vorgesehen, dass die alkalische Waschflüssigkeit 9 nach dem Schritt x) mittels Membranfiltration und/oder chemische Fällung aufbereitet wird. Dadurch können die gelösten Bestandteile des Topcoats 5 und ggf. der Metallschicht 7 wieder aus der alkalischen Waschflüssigkeit 9 entfernt werden, sodass die alkalische Waschflüssigkeit 9 für einen weiteren nachfolgenden Recyclingprozess wieder verwendet werden kann.

Es ist zweckmäßig, dass während oder nach dem Schritt x) das Schnittmaterial in der alkalischen Waschflüssigkeit 9 eine Konzentration im Bereich von 1 Gew.-% bis 30 Gew.-%, bevorzugt von 5 Gew.-% bis 15 Gew.-%, aufweist. Die Konzentration berechnet sich insbesondere aus dem Verhältnis der Summe des Gewichts von in der alkalischen Waschflüssigkeit 9 vorliegender Transferlage 4 zu dem Gewicht der alkalischen Waschflüssigkeit 9 mit der in der alkalischen Waschflüssigkeit 9 gelöstem Topcoat 5 und mit der Transferlage 4. Es handelt sich somit vorzugsweise im Wesentlichen um die Feststoffkonzentration in der Waschflüssigkeit 9 mit der Transferlage 4.

Die benötigte Zeit, bis der alkalisch lösliche Topcoat 5 in Schritt x) aufgelöst ist, sowie die Partikelgröße der abgeschiedenen Partikel der Transferlage 4 sind insbesondere abhängig von dem pH-Wert der alkalischen Waschflüssigkeit 9, der Temperatur der alkalischen Waschflüssigkeit 9, der Rührgeschwindigkeit in der Waschflüssigkeit 9 und der Menge an Schnittmaterial bzw. Menge an Transferfolie 1 im Recyclingbehälter und/oder im Waschflüssigkeitsbad. Je höher der pH-Wert der alkalischen Waschflüssigkeit 9 und je höher die Temperatur der alkalischen Waschflüssigkeit 9 sowie je höher die Rührgeschwindigkeit in der alkalischen Waschflüssigkeit 9, desto schneller erfolgt das Auflösen 10 des alkalisch löslichen Topcoats 5, insbesondere des alkalisch löslichen Bindemittels des Topcoats 5, und umso kleinere Partikel der Transferlage 4 werden erzeugt. Die Wahl der Parameter ist vorzugsweise dabei so zu treffen, dass die Entstehung nanoskaliger Partikel vermieden wird. Weiter ist es möglich, durch die Wahl der entsprechenden Geometrie und des Volumens des Recyclingbehälters, insbesondere eines Behälters für das Waschflüssigkeitsbad, des Füllstands der alkalischen Waschflüssigkeit 9, der Menge an Transferfolie 1, insbesondere in der Form von Schnittmaterial, pro Durchgang und der Rührdauer sowie Rührgeschwindigkeit ein Zusammenkleben und/oder Zusammenfalten der Bestandteile der Trägerfolie 2 und/oder der Transferlage 4 und/oder des Schnittmaterials zu vermeiden.

Vorzugsweise ist vorgesehen, dass der Schritt x) bei Umgebungstemperatur, insbesondere in einem Temperaturbereich von 15°C bis 30°C, durchgeführt wird. Mit anderen Worten bedeutet dies, dass die alkalische Waschflüssigkeit 9 im Schritt x) die Umgebungstemperatur, insbesondere eine Temperatur im Bereich von 15°C bis 30°C aufweist. Es ist jedoch denkbar, dass der Schritt x) in dem gesamten Temperaturbereich durchgeführt wird, in dem die alkalische Waschflüssigkeit 9 im flüssigen Aggregatszustand vorliegt. Vorteilhafterweise wird der Schritt x) bei höheren Temperaturen als Umgebungstemperatur, insbesondere bei mehr als 30°C durchgeführt, da hiermit die Zeit zur Ablösung der Transerlage minimiert wird.

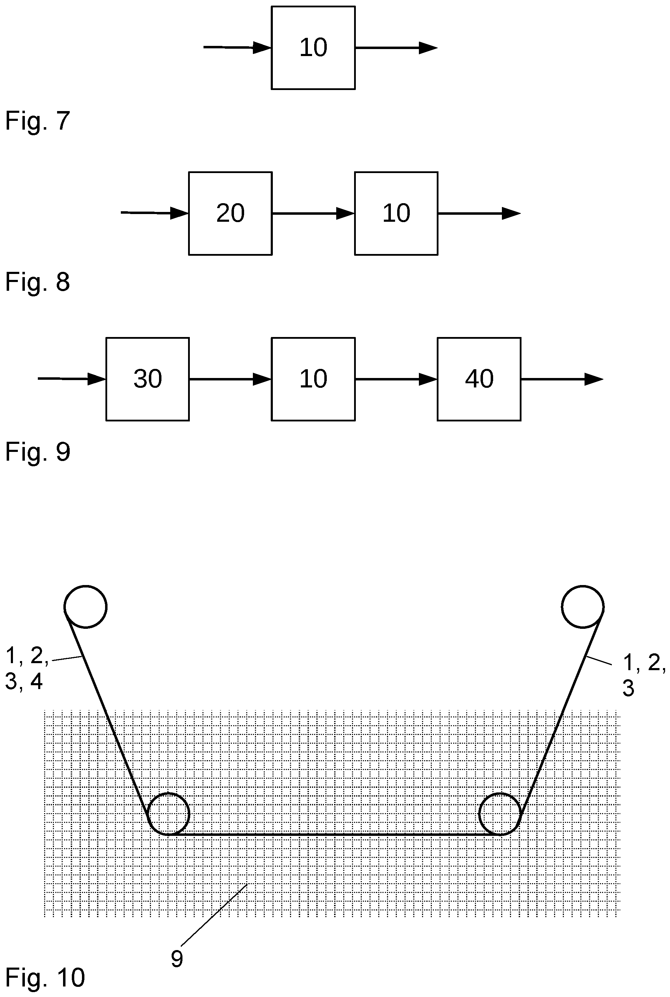

In Figur 7 ist ein beispielhaftes Verfahren zum Recyceln einer Transferfolie 1 mit dem Auflösen 10 des alkalisch löslichen Topcoats 5, insbesondere des Bindemittels des Topcoats 5, in Schritt x) gezeigt.

Bevorzugt ist vorgesehen, dass im Schritt x) die alkalische Waschflüssigkeit 9 einen pH-Wert von größer 9, bevorzugt größer 11, besonders bevorzugt größer 13, aufweist. Es ist jedoch auch möglich, dass die alkalische Waschflüssigkeit 9 einen pH-Wert von 14 oder mehr aufweist. Generell gilt, je höher der pH-Wert der alkalischen Waschflüssigkeit 9, desto schneller wird der alkalisch lösliche Topcoat 5 aufgelöst und desto schneller trennt sich die restliche Transferlage von der Trägerfolie 2.

Figur 8 zeigt ein beispielhaftes Verfahren zum Recyceln einer Transferfolie 1 mit dem Auflösen 10 des alkalisch löslichen Topcoats 5, insbesondere des alkalisch löslichen Bindemittels des Topcoats 5, in dem Schritt x) und dem folgenden Schritt, der insbesondere vor dem Auflösen 10 des alkalisch löslichen Topcoats 5, insbesondere des alkalisch löslichen Bindemittels des Topcoats 5, durchgeführt wird:
a) Zerkleinern 20 der Transferfolie 1 mittels einer Schneidvorrichtung zu Schnittmaterial, bevorzugt wobei die Transferfolie 1 aufgewickelt auf einer Rolle vorliegt.

Hiermit ist es möglich, die Transferfolie 1 in Form von Schnittmaterial in die alkalische Waschflüssigkeit 9 zu geben. Vorteilhafterweise wird dadurch ermöglicht, dass die alkalische Waschflüssigkeit 9 besser über Schnittkanten und Bruchkanten in die Transferfolie 1, insbesondere in die Transferlage 4 und/oder zwischen Trägerfolie 2 und Transferlage 4, eindringt.

Vorzugsweise weist das Schnittmaterial, insbesondere bei Betrachtung senkrecht auf eine von dem Schnittmaterial aufgespannte Ebene, jeweils eine Fläche im Bereich von 0,1 cm² bis 100 cm², bevorzugt von 1 cm² bis 10 cm², auf. Hierdurch ist insbesondere auch gewährleistet, dass wenn die Schichtdicke der Transferlage 4 beispielsweise geringer als 50 µm ist, die Transferlagenpartikel ausreichend groß sind.

Weiter ist bevorzugt vorgesehen, dass vor dem Schritt a) die Transferfolie 1 aufgerollt auf einer Rolle vorliegt. In diesem Fall ist bevorzugt möglich, dass vor dem Zerkleinern 20, insbesondere im Schritt a), weiter folgender Schritt ausgeführt wird:
Transport der Rolle per Hand und/oder mittels einer Zuführvorrichtung zu der Schneidvorrichtung.

Es kann auch vorgesehen sein, dass beim Zerkleinern 20 der Transferfolie 1 im Schritt a) die aufgewickelte Transferfolie 1 in Folienbahnen geschnitten wird, wobei die Rolle mit der Transferfolie 1 in einer V-förmigen Mulde fixiert wird, insbesondere waagrecht fixiert wird, und anschließend mittels eines Messers, insbesondere von oben oder von unten oder von der Seite, in Längsrichtung bis zum Folienkern aufgeschnitten wird und der Folienkern entnommen wird, insbesondere falls ein Folienkern vorhanden ist. Dies hat den Vorteil, dass die Transferfolie auf einfache Weise schnell von dem Folienkern gelöst wird und für die Weiterverarbeitung verwendet werden kann.

Insbesondere ist es möglich, dass beim Zerkleinern 20, insbesondere im Schritt a), die Schneidvorrichtung die Transferfolie 1 schneidet und/oder häckselt und/oder schreddert und/oder reißt.

Insbesondere, wenn vor dem Schritt x) ein Zerkleinern 20 der Transferfolie 1 gemäß Schritt a) durchgeführt wird, ist vorgesehen, dass die alkalische Waschflüssigkeit 9 mit der Transferfolie 1 und/oder dem Schnittmaterial gerührt wird. Das Rühren begünstigt dabei das Eindringen der alkalischen Waschflüssigkeit 9 in die Transferfolie 1 und beschleunigt somit das Abtrennen der Transferlage 4 von der Trägerfolie 2.

Ferner ist es möglich, dass die alkalische Waschflüssigkeit 9 mit der Transferfolie 1 und/oder dem Schnittmaterial während Schritt x), insbesondere wenn zuvor Schritt a) durchgeführt wird, mit einer Rührdauer in einem Bereich von 30 Sekunden bis 120 Sekunden, vorzugsweise von 60 Sekunden bis 120 Sekunden gerührt wird.

Es ist weiter auch möglich, dass die alkalische Waschflüssigkeit 9 mit der Transferfolie 1 und/oder dem Schnittmaterial während Schritt x), insbesondere wenn zuvor Schritt a) durchgeführt wird, mit einer Rührgeschwindigkeit eines Rührwerkzeugs in einem Bereich von 1 bis 200 Umdrehungen, bevorzugt 10 bis 50 Umdrehungen pro Minute, gerührt wird. Je höher die Rührgeschwindigkeit ist, desto schneller löst sich die Transferlage 4 von der Trägerfolie 2. Zudem wirkt sich das Rühren dahingehend positiv aus, dass geringe Scherkräfte in der Waschflüssigkeit 9 entstehen, die das Ablösen der Transferlage 4 von der Trägerfolie 2 begünstigen.

Insbesondere wenn vor dem Schritt x) das Zerkleinern 20 gemäß Schritt a) durchgeführt wird, entstehen neben den zuvor erwähnten Partikeln der Transferlage 4 auch Trägerfolienschnitte. Bevorzugt entspricht die Fläche der Trägerfolienschnitte, insbesondere bei Betrachtung senkrecht auf eine von dem Trägerfolienschnitt aufgespannte Ebene, der Fläche des Schnittmaterials. Mit anderen Worten bedeutet dies, dass das Recyclingverfahren besonders schonend für das Material der Trägerfolie 2 bzw. die Trägerfolienschnitte ist und von der Trägerfolie 2 an sich keine Partikel abgelöst werden.

Nach dem im Schritt x) die Transferlage 4 von den Trägerfolienschnitten abgelöst wurde, ist insbesondere vorgesehen, dass die Trägerfolienschnitte mittels Filtration und/oder Zentrifugation und/oder Sedimentation von der alkalischen Waschflüssigkeit 9 separiert werden. Während die Filtration und/oder die Zentrifugation mechanische Separationsverfahren beschreiben, beruht die Sedimentation auf einem physikalischen Effekt. Hierbei wird sich der Dichteunterschied der einzelnen Bestandteile der Transferfolie 1 zu Nutze gemacht. Beispielsweise weist eine PET-Trägerfolie eine Dichte von ca. 1,4 g/cm³ auf, wohingegen die Materialien der Schichten der Transferlage 4, beispielsweise der Grundierungsschicht 6 oder der Haftvermittlerschicht 8, eine Dichte im Bereich von 0,9 g/cm³ bis 1,25 g/cm³ aufweisen. Durch gezielte Einstellung der Dichte der alkalischen Waschflüssigkeit 9 kann eine Trennung der Trägerfolie 2 bzw. der Trägerfolienschnitte von den Partikeln der Transferlage 4 erreicht werden. Insbesondere ist vorgesehen, dass die alkalische Waschflüssigkeit 9 eine Dichte im Bereich von 1,2 g/cm³ bis 1,4 g/cm³, bevorzugt im Bereich von 1,25 g/cm³ bis 1,35 g/cm³, aufweist, insbesondere wobei die Dichte der alkalischen Waschflüssigkeit 9 derart gewählt wird, dass eine Sedimentation der Trägerfolie 2 aufgrund von Dichteunterschied stattfindet.

Die Dichte der alkalischen Waschflüssigkeit 9 kann beispielsweise bei Einsatz von Natronlauge oder Kalilauge sehr genau über die Menge an gelösten NaOH oder KOH in Abhängigkeit von der Temperatur eingestellt werden.

Ferner ist es auch möglich, dass eine Kombination der vorgenannten Separationsverfahren stattfindet. Beispielsweise kann eine Vortrennung mittels Sedimentation und anschließend eine Feintrennung durch Filtration und/oder Zentrifugation stattfinden.

Nach dem Ablösen in Schritt x) ist insbesondere vorgesehen, dass die separierten Trägerfolienschnitte gewaschen und/oder neutralisiert und/oder getrocknet, vorzugsweise mittels eines mechanischen und/oder thermischen Trocknungsverfahren, werden, insbesondere wobei eine Reinheit der Trägerfolienschnitte, insbesondere dem Trägerfolienmaterial, in einem Bereich von 99% bis 100% erreicht wird. Mögliche Verunreinigungen sind dabei lediglich auf die Ablöseschicht 3 zurückzuführen, welche unter Umständen entweder vollflächig oder nur in Bereichen, die nicht zuvor auf ein Zielsubstrat übertragen wurden, weiterhin auf der Trägerfolie 2 verbleibt. Da die Ablöseschicht 3 jedoch verglichen zu der Schichtdicke der Trägerfolie 2 eine vernachlässigbar dünne Schichtdicke aufweist, kann dennoch eine Reinheit von über 99% des Trägerfolienmaterials gewährleistet werden.

Vorteilhafterweise ist es möglich, dass nach dem Trocknen die Trägerfolienschnitte eine Feuchtigkeit im Bereich von 0% bis 15%, bevorzugt von 0% bis 5%, aufweisen. Durch das Trocknen wird insbesondere gewährleistet, dass keine weiteren Stoffe, die in der Waschflüssigkeit 9 enthalten sind, in den ggf. nachfolgenden Verfahrensschritten mit einfließen.

Alternativ zu dem Waschen von Schnittmaterial ist es auch möglich, dass das Recyclingverfahren in einem Rolle-zu-Rolle-Verfahren durchgeführt wird. Dies ist schematisch in den Figuren 9 und 10 gezeigt. Hierzu ist bevorzugt vorgesehen, dass das Verfahren vor dem Schritt x) den folgenden Schritt aufweist:
b1) Abwickeln 30 der Transferfolie 1 von einer Abwickelrolle mittels einer Abwickelvorrichtung, wobei die abgewickelte Transferfolie 1 in Kontakt mit der alkalischen Waschflüssigkeit 9 gebracht wird, insbesondere indem die Transferfolie 1 in ein Waschflüssigkeitsbad geführt wird.

Insbesondere wird die Transferfolie 1 hierzu in das Waschflüssigkeitsbad geführt, beispielsweise mittels ein oder mehrerer Umlenkrollen.

Vorzugsweise weist das Verfahren nach dem Schritt b1) und nach dem Schritt x) den folgenden Schritt auf:
b2) Aufwickeln 40 der Trägerfolie 2, auf eine Aufwickelrolle, wobei die Trägerfolie 2 aus dem Bad der alkalischen Waschflüssigkeit 9 herausgeführt wird, insbesondere wobei der Topcoat 5 in gelöster Form und/oder die Transferlage 4 in ungelöster Form in der alkalischen Waschflüssigkeit 9 verbleibt.

Hierbei kann insbesondere auf die Separation der Trägerfolie 2 verzichtet werden, indem die Trägerfolie 2 vorzugsweise durch das Aufwickeln 40 einfach wieder aus der alkalischen Waschflüssigkeit 9 herausgezogen werden kann.

Vorzugsweise wird die Transferfolie 1 insbesondere die Trägerfolie 2, vorzugsweise zwischen Schritt b1) und Schritt b2), mit einer Geschwindigkeit von 1 m/s bis 100 m/s durch die Waschflüssigkeit 9 geführt. Insbesondere wird die Transferfolie 1, insbesondere die Trägerfolie 2, vorzugsweise zwischen Schritt b1) und Schritt b2) für eine Dauer in einem Bereich von 10 s bis 150 s in Kontakt mit der Waschflüssigkeit 9 gebracht und/oder durch das Waschflüssigkeitsbad geführt.

Insbesondere ist es möglich mittels der ein oder mehreren Umlenkrollen die Verweilzeit zu erhöhen und/oder die Auflösung des alkalisch löslichen Topcoats 5 zu beschleunigen, beispielsweise aufgrund der Friktion zwischen Transferlage 4 und Waschflüssigkeit 9 und/oder zwischen dem alkalisch löslichen Topcoat 5 und der Waschflüssigkeit 9.

Weiter ist es möglich, dass die Trägerfolie 2 durch ein Reinigungsbad geführt wird, nachdem die Trägerfolie 2 aus dem Waschflüssigkeitsbad herausgeführt wurde. Hierbei wird die Trägerfolie 2 vorzugsweise in Kontakt mit einer neutralisierenden Reinigungsflüssigkeit gebracht, die bevorzugt ein oder mehrere Materialen aufweist ausgewählt aus Wasser oder alternativ eine homogene Mischung aus Wasser mit ein oder mehreren weiteren Stoffen. Als ein oder mehrere weitere Stoffe werden insbesondere Säuren, bevorzugt einzeln oder in Kombination ausgewählt aus Kohlensäure, Essigsäure, Salzsäure, Schwefelsäure und/oder ein oder mehrere Alkohole, bevorzugt einzeln oder in Kombination ausgewählt aus Methanol, Ethanol, n-Propanol, iso-Propanol, Aceton verwendet. Weiter ist die Zugabe zur Waschflüssigkeit 9 von Additiven und/oder Tensiden, wie beispielsweise Entschäumern, möglich. Vor dem Aufwickeln 40 auf die Aufwickelrolle wird die Trägerfolie 2 vorzugsweise wieder aus dem Reinigungsbad herausgeführt.

Es ist auch möglich, dass die Trägerfolie 2 getrocknet wird nachdem die Trägerfolie 2 aus dem Waschflüssigkeitsbad und/oder dem Reinigungsbad herausgeführt wurde.

Das Verfahren wird somit insbesondere in einem Rolle-zu-Rolle-Verfahren durchgeführt und/oder die Schritte b1), x) und b2) werden in einem Inline-Prozess durchgeführt. Es ist auch ein Ausführungsbeispiel denkbar, worin das Herstellungsverfahren und/oder das Applikationsverfahren der Transferfolie in dem Verfahren zum Recycling der Transferfolie, insbesondere mit den Schritten b1, x) und b2), in einem Inline-Prozess durchgeführt werden.

Es ist auch denkbar, dass zur Ablösung der Transferlage 4 von der Trägerfolie 2 in Schritt x) und/oder zwischen den Schritten b1) und b2) zusätzlich ein mechanisches Abriebsystem und/oder ein Bürstenrollensystem und/oder ein Schaumstoffrollensystem und/oder ein Sprühdüsensystem eingesetzt wird.

Ähnlich wie bei den zuvor beschriebenen Ausführungsbeispielen gemäß den Figuren 4 bis 8, entstehen bei dem Rolle-zu-Rolle-Verfahren Partikel der Transferlage 4, welche mit der alkalischen Waschflüssigkeit 9 ein heterogenes Gemisch bilden. Diese Partikel der Transferlage 4 werden bei dem Rolle-zu-Rolle Verfahren in analogerweise mit den oben beschriebenen Separationsverfahren von der alkalischen Waschflüssigkeit 9 getrennt. Dasselbe gilt auch für den in der alkalischen Waschflüssigkeit 9 gelösten Topcoat 5. Dessen Bestandteile werden ebenfalls aus der Waschflüssigkeit 9 entfernt.

Bevorzugt ist das Ausgangsmaterial sowohl bei dem Rolle-zu-Rolle-Verfahren als auch bei dem Verfahren mit Zerkleinerung dasselbe, d.h. die Transferfolie 1 liegt bevorzugt aufgewickelt auf einer Rolle vor. Vorzugsweise weist die Transferfolie 1 vor dem Schritt x), insbesondere vor dem Schritt a) und/oder b1), einen Anteil von Klebestreifen und/oder Spleißklebebänder im Bereich von 0 Gew.-% bis 0,5 Gew.-%, bevorzugt von 0 Gew.-% bis 0,1 Gew.-%, auf. Derartige Klebestreifen oder Spleißklebebänder gelten als Fremdmaterialien, welche ebenfalls von der Trägerfolie 2 getrennt werden. Bevorzugt ist vorgesehen, dass vor dem Schritt x), insbesondere vor dem Schritt a) und/oder vor dem Schritt b1), die Transferfolie 1 einen Fremdmaterialanteil im Bereich von 0 Gew.-% bis 5 Gew.-%, bevorzugt von 0 Gew.-% bis 1 Gew.-%, aufweist.

Ferner ist es auch möglich, dass nach dem Schritt x) die Trägerfolie 2 und/oder die Trägerfolienschnitte und/oder das Material der Trägerfolie 2, zu einem Kompakterzeugnis und/oder Extrusionserzeugnis weiterverarbeitet werden, insbesondere wobei das Kompakterzeugnis und/oder das Extrusionserzeugnis für zumindest einen nachfolgenden Prozess oder eine Kombination von Prozessen geeignet ist, ausgewählt aus: Spritzguss, Extrusion, Flachfolienextrusion, Pressverfahren, Compoundieren, chemisches Recycling und/oder energetische Verwertung.

### Bezugszeichenliste

- 1: Transferfolie
- 2: Trägerfolie
- 3: Ablöseschicht
- 4: Transferlage
- 5: Topcoat
- 6: Grundierungsschicht
- 7: Metallschicht
- 8: Haftvermittlerschicht
- 9: alkalische Waschflüssigkeit

- 10: Auflösen des alkalisch löslichen Topcoats
- 20: Zerkleinern
- 30: Abwickeln
- 40: Aufwickeln

## Patentansprüche

1. Transferfolie (1), insbesondere recyclingfähige Transferfolie (1), aufweisend eine Trägerfolie (2) und eine zumindest teilweise auf der Trägerfolie (2) angeordneten Transferlage (4), wobei zwischen der Trägerfolie (2) und der Transferlage (4) eine Ablöseschicht (3) angeordnet ist,
**dadurch gekennzeichnet,**
**dass** die Transferlage (4) einen alkalisch löslichen Topcoat (5) aufweist, wobei der Topcoat (5) auf der Ablöseschicht (3) angeordnet ist und
**dass** der Topcoat (5) zu mindestens 40% bis 100% ein Bindemittel oder Bindemittelgemisch umfasst, das in einer alkalischen Waschflüssigkeit (9), insbesondere Lauge oder alkalischen Lösung, mit einem pH-Wert größer als 8,5 zu mindestens 50% löslich ist.

2. Transferfolie (1) nach Anspruch 1,
**dadurch gekennzeichnet,**
**dass** der Topcoat (5) transparent, semitransparent, transparent eingefärbt, eingefärbt, opak und/oder mattiert ist
und/oder
**dass** der Topcoat (5) eine Schichtdicke der getrockneten Schicht im Bereich von 0,2 µm bis 20,0 µm, vorzugsweise im Bereich von 0,4 µm bis 8 µm, aufweist.

3. Transferfolie (1) nach einem der vorhergehenden Ansprüche,
**dadurch gekennzeichnet,**
**dass** die Ablöseschicht (3) ein Auftragsgewicht der getrockneten Schicht im Bereich von 0,001 µm bis 0,080 µm, bevorzugt von 0,004 µm bis 0,050 µm aufweist und/oder
**dass** die Ablöseschicht (3) transparent und/oder transluzent und/oder opak und/oder eingefärbt und/oder zumindest teilweise eingefärbt und/oder glasklar ausgebildet ist.

4. Transferfolie (1) nach einem der vorhergehenden Ansprüche,
**dadurch gekennzeichnet,**
**dass** die Transferlage (4) weitere Schichten aufweist, einzeln oder in Kombination ausgewählt aus: zumindest eine Metallschicht (7), zumindest eine Grundierungsschicht (6), zumindest eine Farbschicht, zumindest eine Kleberschicht, zumindest eine Haftvermittlerschicht (8), zumindest eine Barriereschicht, zumindest eine Schutzschicht, zumindest eine Replikationsschicht, zumindest eine Oxidschicht, zumindest eine Maskenschicht.

5. Transferfolie (1) nach Anspruch 4,
**dadurch gekennzeichnet**,
die Grundierungsschicht (6) eine Schichtdicke der getrockneten Schicht im Bereich von 0,1 µm bis 5,0 µm, vorzugsweise in einem Bereich von 0,5 µm bis 3 µm, aufweist, bevorzugt wobei bei Kaltprägeapplikationen die Grundierungsschicht (6) eine Schichtdicke der getrockneten Schicht im Bereich von 0,1 µm bis 0,8 µm aufweist und bei Heißprägeapplikationen die Grundierungsschicht (6) eine Schichtdicke der getrockneten Schicht im Bereich von 0,5 µm bis 3 µm aufweist.

6. Transferfolie (1) nach Anspruch 4 oder 5,
**dadurch gekennzeichnet,**
**dass** die Haftvermittlerschicht (8) eine Schichtdicke in einem Bereich von 0,01 µm bis 0,5 µm, vorzugsweise in einem Bereich von 0,01 µm bis 0,3 µm, aufweist.

7. Transferfolie (1) nach einem der vorhergehenden Ansprüche,
**dadurch gekennzeichnet,**
**dass** die Trägerfolie (2) eine Schichtdicke im Bereich von 4,5 µm bis 100 µm, bevorzugt im Bereich von 4,5 µm bis 12 µm, aufweist und/oder dass die Trägerfolie (2) einen Hauptbestandteil, bevorzugt PET, umfasst, wobei der Anteil des Hauptbestandteils, bevorzugt des PET, in der Trägerfolie (2) mehr als 97%, bevorzugt mehr als 99,9%, besonders bevorzugt mehr als 99,97%, beträgt und/oder
**dass** die Trägerfolie (2) farblos, transparent, glasklar, opak, eingefärbt, zumindest partiell eingefärbt oder farbig ist.

8. Transferfolie (1) nach einem der vorhergehenden Ansprüche,
**dadurch gekennzeichnet,**
**dass** die Ablösekraft zur Ablösung der Transferlage (4) von der Trägerfolie (2), insbesondere bei Temperaturen im Bereich von 15°C bis 35°C, in einem Bereich von 1 cN/cm bis 10 cN/cm, insbesondere bei Kaltprägefolien bevorzugt im Bereich von 1 cN/cm bis 3 cN/cm, und/oder insbesondere bei Heißprägefolien bevorzugt im Bereich von 2 cN/cm bis 5 cN/cm, liegt und/oder
**dass** die geringste Ablösekraft innerhalb oder zwischen zwei oder mehr Schichten der Transferlage (4) mindestens doppelt so hoch ist wie die Ablösekraft der Transferlage (4) von der Trägerfolie (2), insbesondere in einem Bereich von 10 cN/cm bis 100 cN/cm, bevorzugt mindestens 20 cN/cm bis 100 cN/cm, besonders bevorzugt mindestens 40 cN/cm bis 100 cN/cm, liegt.

9. Verfahren zur Herstellung einer Transferfolie (1) nach den Ansprüchen 1 bis 8, wobei die folgenden Schritte, insbesondere in der folgenden Reihenfolge, durchgeführt werden:
- Bereitstellen einer Trägerfolie (2)
- Aufbringen einer Ablöseschicht (3) auf die Trägerfolie (2), insbesondere mittels Tiefdruckverfahrens
- Aufbringen ein oder mehrerer Schichten einer Transferlage (4), wobei ein alkalisch löslicher Topcoat (5) als erste Schicht der Transferlage (4), insbesondere mittels Tiefdruckverfahrens oder Schlitzdüsenverfahren, aufgebracht wird, derart, dass der Topcoat (5) auf die Ablöseschicht (3) angeordnet wird, wobei der Topcoat (5) im wässrigen Zustand appliziert wird und anschließend getrocknet wird, wobei alkalische Zusätze vollständig oder zumindest teilweise herausgetrocknet werden.

10. Verfahren zur Herstellung einer Transferfolie (1) nach Anspruch 9,
**dadurch gekennzeichnet,**
**dass** der Topcoat (5) mit einem Auftragsgewicht der getrockneten Schicht im Bereich von 0,5 g/m² bis 20,0 g/m², vorzugsweise im Bereich von 0,8 g/m² bis 10,0 g/m², aufgebracht wird und/oder
**dass**
der wässrige Topcoat (5) einen Festkörperanteil im Bereich von 5% bis 45%, bevorzugt im Bereich von 15% bis 30%, besonders bevorzugt im Bereich von 15% bis 25%, aufweist.

11. Verfahren zur Herstellung einer Transferfolie (1) nach Anspruch 9 oder 10,
**dadurch gekennzeichnet,**
**dass** die Ablöseschicht (3) mittels eines Tiefdruckverfahrens mit einem Auftragsgewicht der getrockneten Schicht im Bereich von 0,001 g/m² bis 0,060 g/m², bevorzugt von 0,005 g/m² bis 0,050 g/m² aufgebracht wird.

12. Verfahren nach einem der Ansprüche 9 bis 11,
**dadurch gekennzeichnet,**
**dass** eine Grundierungsschicht (6) als eine der ein oder mehreren Schichten der Transferlage (4) mittels eines Druckverfahrens und/oder mittels Gießens und/oder mittels Rakels aufgebracht wird insbesondere wobei die Grundierungsschicht (6) mit einem Auftragsgewicht der getrockneten Schicht im Bereich von 0,2 g/m² bis 5,0 g/m² aufgebracht wird, bevorzugt wobei bei Kaltprägeapplikationen die Grundierungsschicht (6) mit einem Auftragsgewicht der getrockneten Schicht im Bereich von 0,2 g/m² bis 1,0 g/m² aufgebracht wird und bei Heißprägeapplikationen die Grundierungsschicht (6) mit einem Auftragsgewicht der getrockneten Schicht im Bereich von 0,5 g/m² bis 5,0 g/m² aufgebracht wird.

13. Verfahren zum Recycling einer Transferfolie (1) gemäß den Ansprüchen 1 bis 8, bevorzugt hergestellt mit einem Verfahren nach den Ansprüchen 9 bis 12, aufweisend eine Trägerfolie (2) und eine zumindest teilweise auf der Trägerfolie (2) angeordneten Transferlage (4), wobei zwischen der Trägerfolie (2) und der Transferlage (4) eine Ablöseschicht (3) angeordnet ist, und wobei die Transferlage (4) einen alkalisch löslichen Topcoat (5) aufweist, wobei der Topcoat (5) auf der Ablöseschicht (3) angeordnet ist, und wobei bei dem Verfahren der folgende Schritt durchgeführt wird:
x) Auflösen (10) des alkalisch löslichen Topcoats (5), insbesondere des alkalisch löslichen Bindemittels des Topcoats (5), mittels einer alkalischen Waschflüssigkeit (9), vorzugsweise in einem Waschflüssigkeitsbad, wobei die Transferlage (4) von der Trägerfolie (2) abgelöst wird, wobei während dem Schritt x) der Topcoat (5) dadurch aufgelöst wird, dass über Schnittkanten und/oder Bruchkanten und/oder Risse und/oder Mikrorisse der Transferfolie (1), insbesondere der Transferlage (4), die alkalische Waschflüssigkeit (9) in die Transferfolie (1), insbesondere in die Transferlage (4) und/oder zwischen Trägerfolie (2) und Transferlage (4), eindringt und insbesondere aufquillt.

14. Verfahren nach Anspruch 13,
**dadurch gekennzeichnet,**
**dass** nach dem Schritt x) die Trägerfolie (2) und/oder das Material der Trägerfolie (2), eine Reinheit im Bereich von 99,0 Gew.-% bis 100,0 Gew.-% aufweist.

15. Verfahren nach Anspruch 13 oder 14,
**dadurch gekennzeichnet,**
**dass** während dem Schritt x) die Transferlage (4) in Partikel zerfällt, wobei die Partikel in der alkalischen Waschflüssigkeit (9) unlöslich sind, insbesondere wobei die Partikel bei einer ebenen Betrachtung der Partikel eine Größe im Bereich von 10 µm bis 50 mm, vorzugsweise im Bereich von 50 µm bis 5 mm, besonders bevorzugt im Bereich von 20 µm bis 5 mm, aufweisen.

16. Verfahren nach einem der Ansprüche 13 bis 15,
**dadurch gekennzeichnet,**
**dass** im Schritt x) die alkalische Waschflüssigkeit (9) einen pH-Wert von größer 9, bevorzugt größer 11, besonders bevorzugt größer 13, aufweist; und/oder
**dass** die alkalische Waschflüssigkeit (9) eine oder mehrere Lösungen der nachfolgenden Lösungen umfasst: Lösungen von Alkalimetall- oder Erdalkalimetallhydroxiden, wie Kaliumhydroxid, Natriumhydroxid oder Caliumhydroxid; oder Erdalkalioxide, wie Calciumoxid oder Bariumoxid; oder Lösungen von Ammoniak oder Aminen; und/oder
**dass** die alkalische Waschflüssigkeit (9) eine Dichte im Bereich von 1,2 g/cm³ bis 1,4 g/cm³, bevorzugt im Bereich von 1,25 g/cm³ bis 1,35 g/cm³, aufweist, insbesondere wobei die Dichte der alkalischen Waschflüssigkeit (9) derart gewählt wird, dass eine Sedimentation der Trägerfolie (2) aufgrund von Dichteunterschied stattfindet.

17. Verfahren nach einem der Ansprüche 13 bis 16,
**dadurch gekennzeichnet,**
**dass** der Schritt x) bei Umgebungstemperatur, insbesondere in einem Temperaturbereich von 15°C bis 30°C, durchgeführt wird.

18. Verfahren nach einem der Ansprüche 13 bis 17,
**dadurch gekennzeichnet,**
**dass** bei dem Verfahren vor dem Schritt x) folgender Schritt durchgeführt wird:
a) Zerkleinern (20) der Transferfolie (1) mittels einer Schneidvorrichtung zu Schnittmaterial, bevorzugt wobei die Transferfolie (1) aufgewickelt auf einer Rolle vorliegt,
insbesondere wobei im Schritt a) das Schnittmaterial, insbesondere bei Betrachtung senkrecht auf eine von dem Schnittmaterial aufgespannte Ebene, jeweils eine Fläche im Bereich von 0,1 cm² bis 100 cm², bevorzugt von 1 cm² bis 10 cm², aufweist.

19. Verfahren nach Anspruch 18,
**dadurch gekennzeichnet,**
**dass** während dem Schritt x), insbesondere wenn zuvor Schritt a) durchgeführt wird, das Schnittmaterial in der alkalischen Waschflüssigkeit (9) eine Konzentration im Bereich von 1 Gew.-% bis 30 Gew.-%, bevorzugt von 5 Gew.-% bis 15 Gew.-%, aufweist.

20. Verfahren nach Anspruch 18 oder 19,
**dadurch gekennzeichnet,**
**dass** die alkalische Waschflüssigkeit (9) mit der Transferfolie (1) und/oder dem Schnittmaterial während Schritt x), insbesondere wenn zuvor Schritt a) durchgeführt wird, gerührt wird
und/oder dass die alkalische Waschflüssigkeit (9) mit der Transferfolie (1) und/oder dem Schnittmaterial während Schritt x), insbesondere wenn zuvor Schritt a) durchgeführt wird, mit einer Rührdauer in einem Bereich von 30 Sekunden bis 120 Sekunden, vorzugsweise von 60 Sekunden bis 120 Sekunden gerührt wird und/oder
**dass** die alkalische Waschflüssigkeit (9) mit der Transferfolie (1) und/oder dem Schnittmaterial während Schritt x), insbesondere wenn zuvor Schritt a) durchgeführt wird, mit einer Rührgeschwindigkeit eines Rührwerkzeugs in einem Bereich von 1 bis 200 Umdrehungen, bevorzugt 10 bis 50 Umdrehungen pro Minute, gerührt wird.

21. Verfahren nach einem der Ansprüche 18 bis 20,
**dadurch gekennzeichnet,**
**dass** während dem Schritt x), insbesondere wenn zuvor Schritt a) durchgeführt wird, die Transferlage (4) des Schnittmaterials von der Trägerfolie (2) ablöst, sodass Partikel der Transferlage (4) und Trägerfolienschnitte entstehen, bevorzugt wobei
die Trägerfolienschnitte mittels Filtration und/oder Zentrifugation und/oder Sedimentation von der alkalischen Waschflüssigkeit (9) separiert werden, insbesondere wobei die separierten Trägerfolienschnitte gewaschen und/oder neutralisiert und/oder getrocknet, vorzugsweise mittels eines mechanischen und/oder thermischen Trocknungsverfahren, werden, insbesondere wobei eine Reinheit der Trägerfolienschnitte, insbesondere dem Trägerfolienmaterial, in einem Bereich von 99% bis 100% erreicht wird.

22. Verfahren nach einem der Ansprüche 13 bis 21,
**dadurch gekennzeichnet,**
**dass** das Verfahren vor dem Schritt x) den folgenden Schritt aufweist:
b1) Abwickeln (30) der Transferfolie (1) von einer Abwickelrolle mittels einer Abwickelvorrichtung, wobei die abgewickelte Transferfolie (1) in Kontakt mit der alkalischen Waschflüssigkeit (9) gebracht wird, insbesondere indem die Transferfolie (1) in einem Waschflüssigkeitsbad geführt wird, insbesondere wobei
das Verfahren nach dem Schritt b1) und nach dem Schritt x) den folgenden Schritt aufweist:
b2) Aufwickeln (40) der Trägerfolie (2), auf eine Aufwickelrolle, wobei die Trägerfolie (2) aus dem Bad der alkalischen Waschflüssigkeit (9) herausgeführt wird, insbesondere wobei der Topcoat (5) in gelöster Form und/oder die Transferlage (4) in ungelöster Form in der alkalischen Waschflüssigkeit (9) verbleibt, insbesondere
**dass** zur Ablösung der Transferlage (4) von der Trägerfolie (2) in Schritt x) und/oder zwischen den Schritten b1) und b2) zusätzlich ein mechanisches Abriebsystem und/oder ein Bürstenrollensystem und/oder ein Schaumstoffrollensystem und/oder ein Sprühdüsensystem eingesetzt wird.

23. Verfahren nach einem der Ansprüche 13 bis 22,
**dadurch gekennzeichnet,**
**dass** nach dem Schritt x) unlösliche Partikel der Transferlage (4) mittels eines Separationsverfahrens von der alkalischen Waschflüssigkeit (9) getrennt werden, insbesondere wobei das Separationsverfahren Filtration und/oder Zentrifugieren und/oder Sieben und/oder Dekantieren umfasst, und/oder
**dass** die alkalische Waschflüssigkeit (9) nach dem Schritt x) mittels Membranfiltration und/oder chemische Fällung aufbereitet wird.

24. Verfahren nach einem der Ansprüche 13 bis 23,
**dadurch gekennzeichnet,**
**dass** nach dem Schritt x) die Trägerfolie (2) und/oder die Trägerfolienschnitte und/oder das Material der Trägerfolie (2), zu einem Kompakterzeugnis und/oder Extrusionserzeugnis weiterverarbeitet werden, insbesondere wobei das Kompakterzeugnis und/oder das Extrusionserzeugnis für zumindest einen nachfolgenden Prozess oder eine Kombination von Prozessen geeignet ist, ausgewählt aus: Spritzguss, Extrusion, Flachfolienextrusion, Pressverfahren, Compoundieren, chemisches Recycling und/oder energetische Verwertung.

## Claims

1. Transfer film (1), in particular recyclable transfer film (1), having a carrier film (2) and a transfer ply (4) arranged at least partially on the carrier film (2), wherein a detachment layer (3) is arranged between the carrier film (2) and the transfer ply (4),
**characterised in that**
the transfer ply (4) has an alkali-soluble top coat (5), wherein the top coat (5) is arranged on the detachment layer (3), and the top coat (5) comprises at least 40% to 100% binder or binder mixture that is at least 50% soluble in an alkaline washing liquid (9), in particular lye or alkaline solution, with a pH value of greater than 8.5.

2. Transfer film (1) according to claim 1,
**characterised in that**
the top coat (5) is transparent, semi-transparent, transparently dyed, dyed, opaque and/or matt,
and/or
the top coat (5) has a layer thickness of the dried layer ranging from 0.2 µm to 20.0 µm, preferably ranging from 0.4 µm to 8 µm.

3. Transfer film (1) according to one of the preceding claims,
**characterised in that**
the detachment layer (3) has an application weight of the dried layer ranging from 0.001 µm to 0.080 µm, preferably from 0.004 µm to 0.050 µm, and/or
the detachment layer (3) is formed transparently and/or translucently and/or opaquely and/or dyed and/or at least partially dyed and/or glass-clear.

4. Transfer film (1) according to one of the preceding claims,
**characterised in that**
the transfer ply (4) has further layers, selected individually or in combination from: at least one metal layer (7), at least one priming layer (6), at least one coloured layer, at least one adhesive layer, at least one adhesion promoting layer (8), at least one barrier layer, at least one protective layer, at least one replication layer, at least one oxide layer, at least one masking layer.

5. Transfer film (1) according to claim 4,
**characterised in that**
the priming layer (6) has a layer thickness of the dried layer ranging from 0.1 µm to 5.0 µm, preferably ranging from 0.5 µm to 3 µm, preferably wherein, in cold stamping applications, the priming layer (6) has a layer thickness of the dried layer ranging from 0.1 µm to 0.8 µm and, in hot stamping applications, the priming layer (6) has a layer thickness of the dried layer ranging from 0.5 µm to 3 µm.

6. Transfer film (1) according to claim 4 or 5,
**characterised in that**
the adhesion promoting layer (8) has a layer thickness ranging from 0.01 µm to 0.5 µm, preferably ranging from 0.01 µm to 0.3 µm.

7. Transfer film (1) according to one of the preceding claims,
**characterised in that**
the carrier film (2) has a layer thickness ranging from 4.5 µm to 100 µm, preferably ranging from 4.5 µm to 12 µm, and/or
the carrier film (2) comprises a main component, preferably PET, wherein the proportion of the main component, preferably PET, in the carrier film (2) is more than 97%, preferably more than 99.9%, particularly preferably more than 99.97%, and/or the carrier film (2) is colourless, transparent, glass-clear, opaque, dyed, at least partially dyed or coloured.

8. Transfer film (1) according to one of the preceding claims,
**characterised in that**
the detachment force for detaching the transfer ply (4) from the carrier film (2), in particular at temperatures ranging from 15°C to 35°C, ranges from 1 cN/cm to 10 cN/cm, in particular with cold stamping films ranges from 1 cN/cm to 3 cN/cm, and/or in particular in hot stamping films preferably ranges from 2 cN/cm to 5 cN/cm, and/or the lowest detachment force inside or between two or more layers of the transfer ply (4) is at least twice as great as the detachment force of the transfer ply (4) from the carrier film (2), in particular ranges from 10 cN/cm to 100 cN/cm, preferably at least 20 cN/cm to 100 cN/cm, particularly preferably at least 40 cN/cm to 100 cN/cm.

9. Method for producing a transfer film (1) according to claims 1 to 8, wherein the following steps are carried out, in particular in the following order:
- providing a carrier film (2)
- applying a detachment layer (3) onto the carrier film (2), in particular by means of an intaglio method
- applying one or more layers of a transfer ply (4), wherein an alkali-soluble topcoat (5) is applied as the first layer of the transfer ply (4), in particular by means of an intaglio method or a slit die method, in such a way that the top coat (5) is arranged onto the detachment layer (3), wherein the top coat (5) is applied in an aqueous state and is subsequently dried, wherein alkaline additives are completely or at least partially dried out.

10. Method for producing a transfer film (1) according to claim 9,
**characterised in that**
the top coat (5) is applied with an application weight of the dried layer ranging from 0.5 g/m² to 20.0 g/m², preferably ranging from 0.8 g/m² to 10.0 g/m², and/or
the aqueous top coat (5) has a solid body proportion ranging from 5% to 45%, preferably ranging from 15% to 30%, particularly preferably ranging from 15% to 25%.

11. Method for producing a transfer film (1) according to claim 9 or 10,
**characterised in that**
the detachment layer (3) is applied by means of an intaglio method with an application weight of the dried layer ranging from 0.001 g/m² to 0.060 g/m², preferably from 0.005 g/m² to 0.050 g/m².

12. Method according to one of claims 9 to 11,
**characterised in that**
a priming layer (6) is applied as one of the one or more layers of the transfer ply (4) by means of a printing method and/or by means of casting and/or by means of a doctor blade, in particular wherein the priming layer (6) is applied with an application weight of the dried layer ranging from 0.2 g/m² to 5.0 g/m², preferably wherein, in cold stamping applications, the priming layer (6) is applied with an application weight of the dried layer ranging from 0.2 g/m² to 1.0 g/m² and, in hot stamping applications, the priming layer (6) is applied with an application weight of the dried layer ranging from 0.5 g/m² to 5.0 g/m².

13. Method for recycling a transfer film (1) according to claims 1 to 8, preferably produced with a method according to claims 9 to 12, having a carrier film (2) and a transfer ply (4) arranged at least partially on the carrier film (2), wherein a detachment layer (3) is arranged between the carrier film (2) and the transfer ply (4), and wherein the transfer ply (4) has an alkali-soluble top coat (5), wherein the top coat (5) is arranged on the detachment layer (3), and wherein in the method the following step is carried out:
x) dissolving (10) the alkali-soluble top coat (5), in particular the alkali-soluble binder of the top coat (5), by means of an alkaline washing liquid (9), preferably in a washing liquid bath, wherein the transfer ply (4) is detached from the carrier film (2), wherein during step x), the top coat (5) is dissolved by the alkaline washing liquid (9) penetrating and in particular swelling into the transfer film (1), in particular the transfer ply (4) and/or between the carrier film (2) and the transfer ply (4) via cutting edges and/or fold-lines and/or fissures and/or micro fissures of the transfer film (1), in particular the transfer ply (4).

14. Method according to claim 13,
**characterised in that**,
after step x), the carrier film (2) and/or the material of the carrier film (2) has a purity ranging from 99.0 % b/w to 100.0 % b/w.

15. Method according to claim 13 or 14,
**characterised in that**,
during step x), the transfer ply (4) breaks into particles, wherein the particles are insoluble in the alkaline washing liquid (9), in particular wherein, when viewed on a flat plane, the particles have a size ranging from 10 µm to 50 mm, preferably ranging from 50 µm to 5 mm, particularly preferably ranging from 20 µm to 5 mm.

16. Method according to one of claims 13 to 15,
**characterised in that**,
in step x), the alkaline washing liquid (9) has a pH value of greater than 9, preferably greater than 11, particularly preferably greater than 13; and/or
the alkaline washing liquid (9) comprises one or more solutions of the following solutions: solutions of alkaline metal or alkaline earth metal hydroxides, such as potassium hydroxide, sodium hydroxide or calcium hydroxide; or alkaline earth oxides, such as calcium oxide or barium oxide; or solutions of ammonia or amines; and/or
the alkaline washing liquid (9) has a density ranging from 1.2 g/cm³ to 1.4 g/cm³, preferably ranging from 1.25 g/cm³ to 1.35 g/cm³, in particular wherein the density of the alkaline washing liquid (9) is chosen in such a way that a sedimentation of the carrier film (2) takes place due to density difference.

17. Method according to one of claims 13 to 16,
**characterised in that**
step x) is carried out at ambient temperature, in particular in a temperature range of from 15°C to 30°C.

18. Method according to one of claims 13 to 17,
**characterised in that**,
in the method, the following step is carried out before step x):
a) shredding (20) the transfer film (1) by means of a cutting device to produce cut material, preferably wherein the transfer film (1) is present rolled up on a roller,
in particular wherein, in step a), the cut material, in particular when viewed perpendicularly on a plane spanned by the cut material, respectively has an area ranging from 0.1 cm² to 100 cm², preferably from 1 cm² to 10 cm².

19. Method according to claim 18,
**characterised in that**,
during step x), in particular when step a) is carried out beforehand, the cut material in the alkaline washing liquid (9) has a concentration ranging from 1% b/w to 30% b/w, preferably from 5% b/w to 15% b/w.

20. Method according to claim 18 or 19,
**characterised in that**
the alkaline washing liquid (9) with the transfer film (1) and/or the cut material is stirred during step x), in particular when step a) is carried out beforehand,
and/or the alkaline washing liquid (9) with the transfer film (1) and/or the cut material is stirred during step x), in particular when step a) is carried out beforehand, with a stirring duration ranging from 30 seconds to 120 seconds, preferably from 60 seconds to 120 seconds, and/or
the alkaline washing liquid (9) with the transfer film (1) and/or the cut material is stirred during step x), in particular when step a) is carried out beforehand, with a stirring speed of a stirring tool ranging from 1 to 200 revolutions, preferably 10 to 50 revolutions per minute.

21. Method according to one of claims 18 to 20,
**characterised in that**,
during step x), in particular when step a) is carried out beforehand, the transfer ply (4) of the cut material detaches from the carrier film (2), such that particles of the transfer ply (4) and carrier film cuts emerge, preferably wherein
the carrier film cuts are separated from the alkaline washing liquid (9) by means of filtration and/or centrifugation and/or sedimentation, in particular wherein the separated carrier film cuts are washed and/or neutralised and/or dried, preferably by means of a mechanical and/or thermal drying method, in particular wherein a purity of the carrier film cuts, in particular the carrier film material, ranging from 99% to 100% is achieved.

22. Method according to one of claims 13 to 21,
**characterised in that**,
before step x), the method has the following step:
b1) unwinding (30) the transfer film (1) from an unwinding roller by means of an unwinding device, wherein the unwound transfer film (1) is brought into contact with the alkaline washing liquid (9), in particular by the transfer film (1) being guided in a washing liquid bath, in particular wherein,
after step b1) and after step x), the method has the following step:
b2) winding up (40) the carrier film (2) onto a winding roll, wherein the carrier film (2) is guided out of the bath of the alkaline washing liquid (9), in particular wherein the top coat (5) in dissolved form and/or the transfer ply (4) in undissolved form remains in the alkaline washing liquid (9), in particular
to detach the transfer ply (4) from the carrier film (2) in step x) and/or between steps b1) and b2) a mechanical abrasion system and/or brush rolling system and/or a sponge rolling system and/or an aerosol can system is additionally used.

23. Method according to one of claims 13 to 22,
**characterised in that**,
after step x), insoluble particles of the transfer ply (4) are separated from the alkaline washing liquid (9) by means of a separation method, in particular wherein the separation method comprises filtration and/or centrifugation and/or sieving and/or decanting, and/or
the alkaline washing liquid (9) is processed after step x) by means of membrane filtration and/or chemical precipitation.

24. Method according to one of claims 13 to 23,
**characterised in that**,
after step x), the carrier film (2) and/or the carrier film cuts and/or the material of the carrier film (2) are further processed to form a compact product and/or extrusion product, in particular wherein the compact product and/or the extrusion product is suitable for at least one subsequent process or a combination of processes, selected from: injection moulding, extrusion, flat sheet extrusion, pressing methods, compounding, chemical recycling and/or energetic exploitation.

## Revendications

1. Film de transfert (1), en particulier film de transfert (1) recyclable, présentant un film de support (2) et une couche de transfert (4) disposée au moins en partie sur le film de support (2), dans lequel une couche décollable (3) est disposée entre le film de support (2) et la couche de transfert (4),
**caractérisé en ce**
**que** la couche de transfert (4) présente une couche de finition (5) soluble dans les solutions alcalines, dans lequel la couche de finition (5) est disposée sur la couche décollable (3) et que la couche de finition (5) comprend à hauteur d'au moins 40 % à 100 % un liant ou un mélange de liants, qui est soluble à au moins 50 % dans un liquide de lavage alcalin (9), en particulier une lessive ou une solution alcaline, avec une valeur pH supérieure à 8,5.

2. Film de transfert (1) selon la revendication 1,
**caractérisé en ce**
**que** la couche de finition (5) est transparente, semi-transparente, colorée transparente, colorée, opaque et/ou mate
et/ou
**que** la couche de finition (5) présente une épaisseur de couche de la couche séchée dans la plage de 0,2 µm à 20,0 µm, de préférence dans la plage de 0,4 µm à 8 µm.

3. Film de transfert (1) selon l'une quelconque des revendications précédentes,
**caractérisé en ce**
**que** la couche décollable (3) présente un poids d'application de la couche séchée dans la plage de 0,001 µm à 0,080 µm, de manière préférée de 0,004 µm à 0,050 µm et/ou
**que** la couche décollable (3) est transparente et/ou translucide et/ou opaque et/ou colorée et/ou au moins en partie colorée et/ou transparente.

4. Film de transfert (1) selon l'une quelconque des revendications précédentes,
**caractérisé en ce**
**que** la couche de transfert (4) présente d'autres couches, sélectionnées individuellement ou en combinaison parmi : au moins une couche métallique (7), au moins une couche d'apprêt (6), au moins une couche de couleur, au moins une couche de colle, au moins une couche d'agent promoteur d'adhérence (8), au moins une couche barrière, au moins une couche de protection, au moins une couche de réplication, au moins une couche d'oxyde, au moins une couche de masque.

5. Film de transfert (1) selon la revendication 4,
caractérisé en ce
la couche d'apprêt (6) présente une épaisseur de couche de la couche séchée dans la plage de 0,1 µm à 5,0 µm, de préférence dans une plage de 0,5 µm à 3 µm, de manière préférée dans lequel, lors d'applications d'estampage à froid, la couche d'apprêt (6) présente une épaisseur de couche de la couche séchée dans la plage de 0,1 µm à 0,8 µm et, lors d'applications d'estampage à chaud, la couche d'apprêt (6) présente une épaisseur de couche de la couche séchée dans la plage de 0,5 µm à 3 µm.

6. Film de transfert (1) selon la revendication 4 ou 5,
**caractérisé en ce**
**que** la couche d'agent promoteur d'adhérence (8) présente une épaisseur de couche dans une plage de 0,01 µm à 0,5 µm, de préférence dans une plage de 0,01 µm à 0,3 µm.

7. Film de transfert (1) selon l'une quelconque des revendications précédentes,
**caractérisé en ce**
**que** le film de support (2) présente une épaisseur de couche dans la plage de 4,5 µm à 100 µm, de manière préférée dans la plage de 4,5 µm à 12 µm, et/ou que le film de support (2) comprend un composant principal, de préférence du PET, dans lequel la proportion du composant principal, de préférence du PET, dans le film de support (2) est supérieure à 97 %, de manière préférée supérieure à 99,9 %, de manière particulièrement préférée supérieure à 99,97 %, et/ou
**que** le film de support (2) est incolore, transparent, opaque, teinté, au moins en partie teinté ou coloré.

8. Film de transfert (1) selon l'une quelconque des revendications précédentes,
**caractérisé en ce**
**que** la force de décollement pour décoller la couche de transfert (4) du film de support (2), en particulier à des températures situées dans la plage de 15 °C à 35 °C, se situe dans une plage de 1 cN/cm à 10 cN/cm, en particulier pour des films d'estampage à froid de manière préférée dans la plage de 1 cN/cm à 3 cN/cm, et/ou en particulier pour des films d'estampage à chaud de manière préférée dans la plage de 2 cN/cm à 5 cN/cm, et/ou
**que** la force de décollement la plus faible à l'intérieur ou entre deux couches ou plus de la couche de transfert (4) est au moins deux fois plus élevée que la force de décollement de la couche de transfert (4) du film de support (2), en particulier dans une plage de 10 cN/cm à 100 cN/cm, de manière préférée d'au moins 20 cN/cm à 100 cN/cm, de manière particulièrement préférée d'au moins 40 cN/cm à 100 cN/cm.

9. Procédé de fabrication d'un film de transfert (1) selon les
revendications 1 à 8, dans lequel les étapes suivantes sont mises en œuvre, en particulier dans l'ordre suivant :
- la mise à disposition d'un film de support (2)
- l'application d'une couche décollable (3) sur le film de support (2), en particulier au moyen d'un procédé d'héliogravure
- l'application d'une ou de plusieurs couches d'une couche de transfert (4), dans lequel une couche de finition soluble dans des solutions alcalines (5) est appliquée en tant que première couche de la couche de transfert (4), en particulier au moyen d'un procédé d'héliogravure ou d'un procédé à buse à fente, de telle manière que la couche de finition (5) est disposée sur la couche décollable (3), dans lequel la couche de finition (5) est appliquée dans l'état aqueux puis est séchée, dans lequel des additifs alcalins sont séchés complètement ou au moins en partie.

10. Procédé de fabrication d'un film de transfert (1) selon la revendication 9,
**caractérisé en ce**
**que** la couche de finition (5) est appliquée avec un poids d'application de la couche séchée dans la plage de 0,5 g/m² à 20,0 g/m², de préférence dans la plage de 0,8 g/m² à 10,0 g/m², et/ou
**que**
la couche de finition aqueuse (5) présente une teneur en solides dans la plage de 5 % à 45 %, de manière préférée dans la plage de 15 % à 30 %, de manière particulièrement préférée dans la plage de 15 % à 25 %.

11. Procédé de fabrication d'un film de transfert (1) selon la revendication 9 ou 10,
**caractérisé en ce**
**que** la couche décollable (3) est appliquée au moyen d'un procédé d'héliogravure avec un poids d'application de la couche séchée dans la plage de 0,001 g/m² à 0,060 g/m², de manière préférée de 0,005 g/m² à 0,050 g/m ².

12. Procédé selon l'une quelconque des revendications 9 à 11,
**caractérisé en ce**
**qu'**une couche d'apprêt (6) est appliquée en tant qu'une des une ou plusieurs couches de la couche de transfert (4) au moyen d'un procédé d'impression et/ou par moulage et/ou au moyen d'un racloir, en particulier dans lequel la couche d'apprêt (6) est appliquée avec un poids d'application de la couche séchée dans la plage de 0,2 g/m² à 5,0 g/m ². de manière préférée dans lequel lors d'applications d'estampage à froid, la couche d'apprêt (6) est appliquée avec un poids d'application de la couche sèche dans la plage de 0,2 g/m² à 1,0 g/m² et, lors d'applications d'estampage à chaud, la couche d'apprêt (6) est appliquée avec un poids d'application de la couche sèche dans la plage de 0,5 g/m² à 5,0 g/m ².

13. Procédé de recyclage d'un film de transfert (1) selon les
revendications 1 à 8, de manière préférée fabriqué avec un procédé selon les revendications 9 à 12, présentant un film de support (2) et une couche de transfert (4) disposée au moins en partie sur le film de support (2), dans lequel une couche décollable (3) est disposée entre le film de support (2) et la couche de transfert (4), et dans lequel la couche de transfert (4) présente une couche de finition soluble dans des solutions alcalines (5), dans lequel la couche de finition (5) est disposée sur la couche décollable (3), et dans lequel est mis en œuvre lors du procédé l'étape suivante :
x) de dissolution (10) de la couche de finition soluble dans des solutions alcalines (5), en particulier du liant soluble dans des solutions alcalines de la couche de finition (5), au moyen d'un liquide de lavage alcalin (9), de préférence dans un bain de liquide de lavage, dans lequel la couche de transfert (4) est décollée du film de support (2), dans lequel, pendant l'étape x), la couche de finition (5) est dissoute en faisant pénétrer et en particulier en le laissant gonfler dans le film de transfert (1), en particulier dans la couche de transfert (4), et/ou entre le film de support (2) et la couche de transfert (4), le liquide de lavage (9) par des bords de coupe et/ou des bords de rupture et/ou des fissures et/ou des microfissures du film de transfert (1).

14. Procédé selon la revendication 13,
**caractérisé en ce**
**que**, après l'étape x), le film de support (2) et/ou le matériau du film de support (2) présentent une pureté dans la plage de 99,0 % en poids à 100,0 % en poids.

15. Procédé selon la revendication 13 ou 14,
**caractérisé en ce**
**que** lors de l'étape x), la couche de transfert (4) se décompose en particules, dans lequel les particules sont insolubles dans le liquide de lavage alcalin (9), en particulier dans lequel les particules présentent, à l'examen plan des particules, une taille dans la plage de 10 µm à 50 mm, de préférence dans la plage de 50 µm à 5 mm, de manière particulièrement préférée dans la plage de 20 µm à 5 mm.

16. Procédé selon l'une quelconque des revendications 13 à 15,
**caractérisé en ce**
**que** dans l'étape x), le liquide de lavage alcalin (9) présente une valeur pH supérieure à 9, de manière préférée supérieure à 11, de manière particulièrement préférée supérieure à 13 ; et/ou
**que** le liquide de lavage alcalin (9) comprend une ou plusieurs solutions des solutions suivantes : des solutions d'hydroxydes de métaux alcalins ou alcalino-terreux, comme l'hydroxyde de potassium, l'hydroxyde de sodium ou l'hydroxyde de potassium ; ou des oxydes alcalino-terreux, comme l'oxyde de calcium ou l'oxyde de baryum ; ou des solutions d'ammoniac ou d'amines ; et/ou
**que** le liquide de lavage alcalin (9) présente une densité dans la plage de 1,2 g/cm³ à 1,4 g/cm³, de manière préférée dans la plage de 1,25 g/cm³ à 1,35 g/cm³, en particulier dans lequel la densité du liquide de lavage alcalin (9) est choisie de telle manière qu'une sédimentation du film de support (2) a lieu en raison d'une différence de densité.

17. Procédé selon l'une quelconque des revendications 13 à 16,
**caractérisé en ce**
**que** l'étape x) est mise en œuvre à température ambiante, notamment dans une plage de température de 15 °C à 30 °C.

18. Procédé selon l'une quelconque des revendications 13 à 17,
**caractérisé en ce**
**qu'**est mise en œuvre dans le procédé, avant l'étape x), l'étape suivante :
a) de broyage (20) du film de transfert (1) en matériau de coupe au moyen d'un dispositif de coupe, de manière préférée dans lequel le film de transfert (1) est enroulé sur un rouleau,
en particulier dans lequel, à l'étape a), le matériau de coupe, en particulier lorsqu'il est observé verticalement sur un plan formé par le matériau de coupe, présente respectivement une surface dans la plage de 0,1 cm² à 100 cm², de manière préférée de 1 cm² à 10 cm².

19. Procédé selon la revendication 18,
**caractérisé en ce**
**que** pendant l'étape x), en particulier si l'étape a) est mise en œuvre auparavant, le matériau de coupe présente dans le liquide de lavage alcalin (9) une concentration dans la plage de 1 % en poids à 30 % en poids, de manière préférée de 5 % en poids à 15 % en poids.

20. Procédé selon la revendication 18 ou 19,
**caractérisé en ce**
**que** le liquide de lavage alcalin (9) est agité avec le film de transfert (1) et/ou le matériau de coupe pendant l'étape x), en particulier si l'étape a) est mise en œuvre auparavant
et/ou que le liquide de lavage alcalin (9) est agité avec le film de transfert (1) et/ou le matériau de coupe pendant l'étape x), en particulier si l'étape a) est mise en œuvre auparavant, pendant une durée d'agitation dans une plage de 30 secondes à 120 secondes, de préférence de 60 secondes à 120 secondes et/ou
**que** le liquide de lavage alcalin (9) est agité avec le film de transfert (1) et/ou le matériau de coupe pendant l'étape x), en particulier si l'étape a) est mise en œuvre auparavant, à une vitesse d'agitation d'un outil d'agitation dans une plage de 1 à 200 tours, de manière préférée de 10 à 50 tours par minute.

21. Procédé selon l'une quelconque des revendications 18 à 20,
**caractérisé en ce**
**que**, pendant l'étape x), en particulier si l'étape a) est mise en œuvre auparavant, la couche de transfert (4) du matériau de coupe se décolle du film de support (2) si bien que des particules de la couche de transfert (4) et des coupes de film de support se forment, de manière préférée dans lequel
les coupes de film de support sont séparées du liquide de lavage alcalin (9) par filtration et/ou centrifugation et/ou sédimentation, en particulier dans lequel les coupes de film de support séparées sont lavées et/ou neutralisées et/ou séchées, de préférence au moyen d'un procédé de séchage mécanique et/ou thermique, en particulier dans lequel une pureté des coupes de film de support, en particulier du matériau de film de support, est atteinte dans une plage de 99 % à 100 %.

22. Procédé selon l'une quelconque des revendications 13 à 21,
**caractérisé en ce**
**que** le procédé présente avant l'étape x) l'étape suivante :
b1) de déroulement (30) du film de transfert (1) d'un rouleau de déroulement au moyen d'un dispositif de déroulement, dans lequel le film de transfert (1) déroulé est mis en contact avec le liquide de lavage alcalin (9), en particulier en guidant le film de transfert (1) dans un bain de liquide de lavage, en particulier dans lequel
le procédé présente après l'étape b1) et après l'étape x) l'étape suivante :
b2) d'enroulement (40) du film de support (2), sur un rouleau d'enroulement, dans lequel le film de support (2) est sorti du bain du liquide de lavage alcalin (9), en particulier dans lequel la couche de finition (5) reste sous une forme dissoute et/ou la couche de transfert (4) reste sous une forme non dissoute dans le liquide de lavage alcalin (9), en particulier
**qu'**un système d'abrasion mécanique et/ou un système de rouleau-brosse et/ou un système de rouleau-mousse et/ou un système de buse de pulvérisation sont utilisés en supplément pour décoller la couche de transfert (4) du film de support (2) à l'étape x) et/ou entre les étapes b1) et b2).

23. Procédé selon l'une quelconque des revendications 13 à 22,
**caractérisé en ce**
**que**, après l'étape x), des particules insolubles de la couche de transfert (4) sont séparées du liquide de lavage alcalin (9) au moyen d'un procédé de séparation, en particulier dans lequel le procédé de séparation comprend la filtration et/ou la centrifugation et/ou le tamisage et/ou le décantage, et/ou
**que** le liquide de lavage alcalin (9) est préparé après l'étape x) par filtration à membrane et/ou précipitation chimique.

24. Procédé selon l'une quelconque des revendications 13 à 23,
**caractérisé en ce**
**que**, après l'étape x), le film de support (2) et/ou la
les coupes de film de support et/ou le matériau du film de support (2) sont transformés en un produit compact et/ou en un produit d'extrusion, en particulier dans lequel le produit compact et/ou le produit d'extrusion sont adaptés à au moins un processus ou une combinaison de processus suivants, choisis parmi : moulage par injection, extrusion, extrusion de films plats, procédé de pressage, compoundage, recyclage chimique et/ou valorisation énergétique.
